(19) Europäisches Patentamt
European Patent Office
Office européen des brevets

(11) **EP 4 721 976 A1**

(12) **EUROPEAN PATENT APPLICATION**
published in accordance with Art. 153(4) EPC

(43) Date of publication:
08.04.2026 Bulletin 2026/15

(21) Application number: 24815064.1

(22) Date of filing: 26.04.2024

(51) International Patent Classification (IPC):
B32B 27/00 (2006.01)     B32B 27/30 (2006.01)
B32B 27/32 (2006.01)     B65D 65/40 (2006.01)

(52) Cooperative Patent Classification (CPC):
B32B 27/00; B32B 27/30; B32B 27/32; B65D 65/40

(86) International application number:
PCT/JP2024/016419

(87) International publication number:
WO 2024/247580 (05.12.2024 Gazette 2024/49)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 29.05.2023 JP 2023088032

(71) Applicants:
• artience Co., Ltd.
Chuo-ku
Tokyo 104-0031 (JP)
• TOYO INK CO., LTD.
Chuo-ku,
Tokyo 104-8378 (JP)

• Toyo-Morton, Ltd.
Chuo-ku
Tokyo 1040031 (JP)

(72) Inventors:
• KOFUJI, Michihisa
Tokyo 104-8378 (JP)
• SUZUKI, Yuya
Tokyo 104-8378 (JP)
• MAEDA, Satoshi
Tokyo 104-0031 (JP)
• TAKEMOTO, Noboru
Tokyo 104-0031 (JP)

(74) Representative: Becker, Eberhard
Becker Kurig & Partner
Patentanwälte mbB
Bavariastraße 7
80336 München (DE)

(54) **PACKAGING MATERIAL AND METHOD FOR MANUFACTURING PACKAGING MATERIAL**

(57) Provided is a packaging material which has a base material 1, a barrier layer, an adhesive layer, and a base material 2, wherein: the barrier layer contains a hydrophilic resin; the adhesive layer contains a cured product of a polyol and an isocyanate curing agent (I); the permachor value of the polyol is 25-60; the mass per unit area of the adhesive layer is 1.0-4.5 g/m2; and the olefin content of the packaging material is 80% by mass or more in the total mass of the packaging material.

EP 4 721 976 A1

**Description**

Technical Field

The present invention relates to a packaging material and a method for manufacturing a packaging material.

Related Art

Conventionally, packaging materials to which aluminum foil or aluminum vapor deposition has been applied have been widely used for packaging materials that require oxygen barrier properties, such as food packaging materials. However, in recent years, there has been a growing movement toward aluminum-free materials because packaging materials are socially required to have thin films, simplified laminates, recyclability, and the like in response to environmental issues and other concerns.

In addition, in order to impart barrier properties to packaging materials without using aluminum, films having a PVDC (polyvinylidene chloride) layer formed on a plastic film exhibit high oxygen barrier properties not only under low humidity conditions but also under high humidity conditions, and also have relatively high barrier properties against water vapor. However, this PVDC may cause significant adverse effects on the environment and human body due to the generation of chlorine gas and dioxins caused by desorbed chlorine during incineration in waste disposal, so transition to other materials is desired.

In addition, in the case of recycling plastic packaging materials, a concept called "mono-material" has been proposed, in which all the base materials constituting the plastic packaging material are composed of the same type of base material such as polypropylene. While this is a concept that makes packaging materials easier to recycle, there is an issue with oxygen barrier properties when using only a single base material, and using conventional aluminum would hinder recycling, while using coating agents such as PVDC could lead to damage to recycling equipment due to chlorine gas desorbed at high temperatures.

As chlorine-free gas barrier materials, laminates using an adhesive layer imparted with gas barrier properties or a coated film obtained by coating polyvinyl alcohol or the like on a thermoplastic resin film are known. As an example of a laminate using an adhesive layer imparted with gas barrier properties, an invention having a configuration of PET (polyethylene terephthalate)/ester-based adhesive layer/CPP (non-oriented polypropylene) is disclosed, in which the permachor value of the resin composition for gas barrier cured product used for forming the ester-based adhesive layer is 44 to 60 (Patent Document 1). However, in order to impart sufficient barrier properties to the laminate with only the adhesive layer, it is necessary to increase the mass per unit area of the adhesive layer, which causes a problem of residual solvent.

As an example of a laminate using a coated film, a laminated film having a configuration of OPP (biaxially oriented polypropylene)/urethane-based anchor coat layer/vinyl alcohol-based barrier layer/adhesive layer/CPP is disclosed (Patent Documents 2 and 3). However, even in this laminated film, the mass per unit area of the adhesive layer is large, and there is a problem of residual solvent.

Furthermore, in the case of using the laminates described in Patent Documents 1 to 3 as packaging materials, it is considered that there are issues in oxygen barrier properties after bending and the like.

Citation List

Patent Documents

Patent Document 1: Japanese Patent Application Laid-Open (JP-A) No. 2013-129780.
Patent Document 2: Japanese Patent Application Laid-Open (JP-A) No. 2007-136984.
Patent Document 3: Japanese Patent Application Laid-Open (JP-A) No. 2001-129915.

SUMMARY OF INVENTION

Technical Problem

The disclosure aims to provide a packaging material that excels in laminate strength and oxygen barrier property after bending, and has low residual solvent.

The present inventors conducted extensive research on the above issues and found that the above issues may be resolved by using the following packaging material, leading to the present invention.

That is, the present invention relates to the following [1] to [10].

[1] A packaging material including a base material 1, a barrier layer, an adhesive layer, and a base material 2, in which the barrier layer contains a hydrophilic resin, the adhesive layer is a layer containing a cured product of a polyol and an isocyanate curing agent (I), a permachor value of the polyol-derived structure is 25 to 60, a mass per unit area of the adhesive layer is 1.0 to 4.5 g/m$^2$, and an olefin content of the packaging material is 80 % by mass or more in a total mass of packaging material.

[2] The packaging material according to [1], in which the hydrophilic resin is a polyvinyl alcohol resin.

[3] The packaging material according to [1] or [2], in which the barrier layer further contains an inorganic layered filler.

[4] The packaging material according to any one of [1] to [3], in which a mass per unit area of the barrier layer is 0.7 g/m$^2$ or more.

[5] The packaging material according to any one of [1] to [4], in which the polyol has a polyester structure.

[6] The packaging material according to any one of [1] to [5], in which a ratio of a mass per unit area of the barrier layer to a mass per unit area of the adhesive layer is 70:30 to 15:85.

[7] The packaging material according to any one of [1] to [6], further including an anchor coat layer, in which the anchor coat layer contains a urethane resin.

[8] The packaging material according to [7], in which the urea bond concentration of the urethane resin is 0.1 to 1.3 mmol/g.

[9] The packaging material according to any one of [1] to [8], in which the base material 1 and the base material 2 contain a polyolefin resin.

[10] A method for manufacturing a packaging material including a base material 1, a barrier layer, an adhesive layer, and a base material 2, the method including: a step of applying a barrier coating agent to form a barrier layer, and a step of applying a reactive adhesive to form an adhesive layer, in which the barrier layer contains a hydrophilic resin, the adhesive layer is a layer including a reactive adhesive containing a polyol and an isocyanate curing agent (I), a permachor value of the polyol is 25 to 60, a mass per unit area of the adhesive layer is 1.0 to 4.5 g/m$^2$, and an olefin content of the packaging material is 80 % by mass or more in a total mass of the packaging material.

Effects of Invention

The disclosure makes it possible to provide a packaging material that excels in laminate strength and oxygen barrier property after bending, and has low residual solvent.

DESCRIPTION OF EMBODIMENTS

Embodiments of the disclosure are described in detail below, but the description of the described embodiments or requirements is an example of embodiments of the disclosure, and the disclosure is not limited to these contents as long as it does not exceed the gist thereof.

[Packaging Material]

The packaging material is a packaging material including a base material 1, a barrier layer, an adhesive layer, and a base material 2, in which the barrier layer contains a hydrophilic resin, the adhesive layer is a layer containing a cured product of a polyol and an isocyanate curing agent (I), a permachor value of the polyol-derived structure is 25 to 60, a mass per unit area of the adhesive layer is 1.0 to 4.5 g/m$^2$, and an olefin content of the packaging material is 80 % by mass or more in a total mass of packaging material. The packaging material of the disclosure may be suitably used to constitute flexible packaging packages, packaging bags, and the like. The packaging material of the disclosure may be used alone or in combination with other materials. The packaging material may constitute a packaging container. The olefin content of the packaging material is preferably 80 % by mass or more based on the total mass of the packaging material, and more preferably 90 to 99 % by mass. In the case of the olefin content of the packaging material being in the above range, residual solvent may be further reduced.

In dry lamination methods and the like for forming an adhesive layer, the adhesive is applied to a base material or the like in a state dissolved in an organic solvent, but depending on the application conditions and laminated configuration, there is a concern that the organic solvent may penetrate into the base material or the like during application, resulting in increased residual solvent. The packaging material of the disclosure has a barrier layer with a specific configuration and the adhesive layer has a polyol-derived structure with a specific permachor value, which not only improves barrier properties but also may significantly reduce residual solvent due to the integrated effect of the olefin content of the barrier layer, adhesive layer, and packaging material. According to one consideration, the effect is thought to be due to promotion of volatilization of the organic solvent derived from the adhesive layer and prevention of penetration of the organic solvent into the base material 1. Due to these effects, the packaging material of the disclosure excels in laminate strength, residual solvent, and oxygen barrier property after bending.

The configuration of the packaging material may specifically exemplify the following configurations, but is not limited thereto. A configuration sequentially having a base material 1, a barrier layer, and an adhesive layer is preferable, and among these, a configuration sequentially having a base material 1, an anchor coat layer, a barrier layer, an adhesive layer, and a base material 2 is more preferable. In the following configuration representations, "/" means the boundary of each layer. The adhesive layer includes, for example, those composed of adhesives used in dry lamination and the like, which are conventionally known methods.

(1) Base material 1/barrier layer/adhesive layer/base material 2
(2) Base material 1/printing layer/barrier layer/adhesive layer/base material 2
(3) Base material 1/anchor coat layer/barrier layer/adhesive layer/base material 2
(4) Base material 1/printing layer/anchor coat layer/barrier layer/adhesive layer/base material 2
(5) Base material 1/printing layer/anchor coat layer/barrier layer/adhesive layer/intermediate base material/adhesive layer/base material 2
(6) Printing layer/base material 1/anchor coat layer/barrier layer/adhesive layer/base material 2 In the above configuration examples, the base material 1, the intermediate base material, and the base material 2 may be the same or different, and the designation is determined by the positional relationship.

The base material 1, the intermediate base material, and the base material 2 may each be a single layer, may be formed by laminating the same or different plastic base materials, or may be formed by laminating base materials different from plastic base materials. In the case of laminated base materials, a form including an adhesive layer may be employed. Examples of the "base materials different from plastic base materials" include paper base materials and the like, and the type is not limited. The method for laminating the base materials is not particularly limited, and conventionally known methods such as co-extrusion manufacturing method, heat fusion, and pressure bonding via an adhesive layer may be mentioned.

[Base material 1]

The base material 1 is not particularly limited, but examples include, as paper base materials, medium-quality paper, high-quality paper, impregnated paper, cardboard, and kraft paper, and as plastic base materials, biaxially oriented polypropylene (OPP), non-oriented polypropylene (CPP), polyethylene such as low-density polyethylene (LDPE), linear low-density polyethylene (LLDPE), medium-density polyethylene (MDPE), and high-density polyethylene (HDPE), polyolefin base materials such as acid-modified polyethylene, acid-modified polypropylene, copolymer polypropylene, polyethylene terephthalate, polycarbonate, polylactic acid, polystyrene, AS resin, ABS resin, nylon, polyamide, polyvinyl chloride, polyvinylidene chloride, and cellophane, and base materials made of the above composite materials may also be used. In addition, the above base materials may be subjected to vapor deposition of inorganic compounds such as silica, alumina, and aluminum, or coating treatment with polyethylene, polyvinyl alcohol, or the like, and may also be subjected to corona treatment.

Among these, the base material 1 is preferably a polyolefin base material. The polyolefin base material is preferably at least one selected from the group consisting of biaxially oriented polypropylene (OPP), non-oriented polypropylene (CPP), polyethylene such as low-density polyethylene (LDPE), linear low-density polyethylene (LLDPE), medium-density polyethylene (MDPE), and high-density polyethylene (HDPE), acid-modified polyethylene, acid-modified polypropylene, and copolymer polypropylene. The thickness of the base material 1 is not particularly limited, and considering processability into packaging containers, it is preferably 5 $\mu$m or more and 150 $\mu$m or less, and more preferably may be 10 $\mu$m or more and 70 $\mu$m or less.

[Base material 2]

The base material 2 is not particularly limited, but in one embodiment, polyolefin resins, particularly those having heat sealability, may be suitably used. Examples corresponding to this include corona-treated biaxially oriented polypropylene (OPP) film, high-density polyethylene film (HDPE), non-oriented polypropylene (CPP) film, linear low-density polyethylene (LLDPE) film, polyethylene resin film formed by melt coating, and the like. The base material 2 may also be one coated with a heat sealant. The thickness of the base material 2 is not particularly limited, but from the viewpoint of processability during packaging container manufacturing, it is preferably 5 to 150 $\mu$m, and more preferably 10 to 70 $\mu$m.

[Intermediate Base material]

The packaging material of the disclosure may have an intermediate base material for the purpose of improving rigidity and the like. As specific examples of the intermediate base material, similar to the base material 1 and the base material 2, it is preferably a plastic base material mainly containing polyolefin resin as a raw material. For example, polyolefin resins such as low-density polyethylene (LDPE), linear low-density polyethylene (LLDPE), medium-density polyethylene (MDPE), high-density polyethylene (HDPE), ethylene-vinyl acetate copolymer, propylene homopolymer, ethylene-propylene copolymer, and the like may be mentioned. It may also be a composite base material by co-extrusion manufacturing method. Furthermore, the intermediate base material is more preferably made of the same type (identical) material as the base material 1 and the base material 2. The same type (identical) materials include combinations such as polypropylene with polypropylene, polyethylene with polyethylene, and the like.

[Barrier Layer]

The barrier layer is disposed for the purpose of imparting oxygen barrier property to the packaging material and reducing residual solvent through integrated effects with other constituent elements, and the barrier layer contains hydrophilic resin. The barrier layer is preferably formed by a barrier coating agent described later.

The mass per unit area of the barrier layer is preferably 0.7 to 5 $g/m^2$, more preferably 0.8 to 3 $g/m^2$, and even more preferably 0.9 to 1.5 $g/m^2$. In the case of the mass per unit area of the barrier layer being 0.7 $g/m^2$ or more, residual solvent may be reduced, and furthermore, oxygen barrier property after bending becomes good. Generally, in the case of increasing the mass per unit area of the barrier layer, organic solvent that may be contained in the composition for forming the barrier layer increases, so the residual solvent amount of the packaging material is expected to increase as well. However, in the case of the packaging material of the disclosure, the barrier layer functions to prevent migration of organic solvent from the adhesive layer to the base material 1, so it is presumed that residual solvent is further reduced through integrated effects with other constituent elements. On the other hand, in the case of the mass per unit area of the barrier layer being 5 $g/m^2$ or less, laminate strength improves.

<Hydrophilic Resin>

The hydrophilic resin refers to a resin that is miscible with water. Examples of hydrophilic resin include polyvinyl alcohol resin (including the case of being ethylene vinyl alcohol copolymer resin), aqueous acrylic resin, aqueous styrene-acrylic resin, aqueous styrene-maleic acid resin, aqueous urethane resin, aqueous polylactic acid resin, polyvinylpyrrolidone, starch, methylcellulose, carboxymethylcellulose, and modified resins thereof. These hydrophilic resins may be used alone or in combination of two or more types. Among the above, the hydrophilic resin preferably contains polyvinyl alcohol resin.

The content of hydrophilic resin is preferably 30 to 95 % by mass in the total mass of the barrier layer, more preferably 55 to 90 % by mass, and even more preferably 70 to 80 % by mass. In the case of being in the above range, oxygen barrier property after bending may be further improved.

<Polyvinyl Alcohol Resin>

The polyvinyl alcohol resin may be any resin having structural units derived from vinyl alcohol, and it is also preferable in the case of further containing structural units derived from ethylene. Examples of polyvinyl alcohol resin include polyvinyl alcohol resin and ethylene-vinyl alcohol copolymer resin, with polyvinyl alcohol resin and/or ethylene-vinyl alcohol copolymer resin being preferable, and ethylene-vinyl alcohol copolymer resin being more preferable.

The content of structural units derived from ethylene in the ethylene-vinyl alcohol copolymer resin is preferably 1 to 40 mol%, more preferably 3 to 20 mol%, and even more preferably 5 to 15 mol%. In the case of the content of structural units derived from ethylene being in the above range, oxygen barrier property after bending becomes good. The degree of polymerization of the polyvinyl alcohol resin is preferably 100 to 3,000, and more preferably 500 to 2,400. In the case of being in the above range, oxygen barrier property after bending becomes better.

The polyvinyl alcohol resin may have modified functional groups, and examples of functional groups include carbonyl groups, silicon groups, and the like, but are not limited thereto. Further, as the polyvinyl alcohol resin, those crosslinked with a crosslinking agent may be used, and examples of crosslinking agents used include known crosslinking agents such as isocyanate crosslinking agents, epoxy crosslinking agents, melamine crosslinking agents, oxazoline crosslinking agents, and silane coupling crosslinking agents, with oxazoline crosslinking agents and silane coupling crosslinking agents being preferable.

The saponification degree of the polyvinyl alcohol resin is expressed by the following (Formula 1), and is preferably 80 mol% or more, more preferably 90 mol%, and even more preferably 95 mol%. In the case of being in the above range, oxygen barrier property after bending becomes better.

(Formula 1) Saponification degree: (number of hydroxyl groups)/ {(number of hydroxyl groups) + (number of acetate groups)} × 100 [mol%]      [Formula 1]

As the polyvinyl alcohol resin, Kuraray Poval R series (manufactured by Kuraray Co., Ltd., polyvinyl alcohol resin), Kuraray Eval L104B, F104B (manufactured by Kuraray Co., Ltd., ethylene-vinyl alcohol copolymer resin), and the like may be used.

<Inorganic Layered Filler>

The barrier layer preferably further includes an inorganic layered filler. The inorganic layered filler referred to here is an inorganic filler that forms a layered structure, and those that swell and/or cleave in a solvent are particularly preferable. The mass ratio of the hydrophilic resin to the inorganic layered filler is preferably 9:1 to 4:6, more preferably 8:2 to 5:5, and even more preferably 8:2 to 6:4. In the case of the mass ratio being in the above range, oxygen barrier property after bending becomes better.

The average particle diameter of the inorganic layered filler measured by laser light scattering method is preferably 0.1 to 30 $\mu$m, more preferably 0.5 to 15 $\mu$m, even more preferably 1 to 10 $\mu$m, and particularly preferably 1.5 to 5 $\mu$m. The average particle diameter is measured using MT3300EX II manufactured by MicrotracMRB in the disclosure.

The aspect ratio of the inorganic layered filler is preferably 10 to 2000, more preferably 50 to 1000, and even more preferably 200 to 700. The aspect ratio refers to a measured value by scanning electron microscope (SEM), and in the disclosure, it is measured using JSM-7800F manufactured by JEOL Ltd.

The specific surface area of the inorganic layered filler is preferably 0.5 to 250 $m^2$/g, more preferably 1 to 100 $m^2$/g, even more preferably 3 to 50 $m^2$/g, and particularly preferably 5 to 30 $m^2$/g. The specific surface area refers to a value calculated from the adsorption amount of nitrogen gas by the BET method, and in the disclosure, it is measured using TriStar II manufactured by Shimadzu Corporation.

Preferred examples of the inorganic layered filler include montmorillonite, beidellite, saponite, hectorite, sauconite, vermiculite, mica, paragonite, lepidolite, margarite, clintonite, anandite, chlorite, donbassite, sudoite, cookeite, clinochlore, chamosite, nimite, tetrasilylic mica, talc, pyrophyllite, nacrite, kaolinite, halloysite, chrysotile, sodium taeniolite, xanthophyllite, antigorite, dickite, hydrotalcite, and the like. One or more types selected from the group consisting of kaolin, montmorillonite, and mica are preferred, and montmorillonite is more preferred. Since montmorillonite has high water absorption and high viscosity after swelling due to its layered structure, resin may easily enter between the layers of the layered filler, which may contribute to improvement of oxygen barrier property after bending of the packaging material.

These inorganic layered fillers may be naturally occurring ones, artificially synthesized or modified ones, or those treated with organic substances such as onium salts.

The content of the inorganic layered filler is preferably 1 to 40 % by mass in 100 % by mass of the barrier layer, more preferably 10 to 35 % by mass, and even more preferably 20 to 30 % by mass.

<Montmorillonite>

The montmorillonite is represented by the following (Formula 2). Further, bentonite containing montmorillonite as a main component and further containing minerals such as quartz and feldspar may also be preferably used.

$$\text{(Formula 2)} \qquad M_aSi_4(Al_{2-a}Mg_a)O_{10}(OH)_2 \cdot nH_2O$$

(In Formula 2, M represents a sodium cation, and a is 0.25 to 0.60. Further, the number of water molecules bonded to the ion-exchangeable cations between layers may vary according to conditions such as cation species and humidity, so it is represented as $nH_2O$ in the formula.)

Further, montmorillonite includes isomorphic ion substitution products of magnesian montmorillonite, iron montmorillonite, and iron magnesian montmorillonite represented by the following (Formula 3) to (Formula 5), and these may also be used.

$$\text{(Formula 3)} \qquad M_aSi_4(Al_{1.67-a}Mg_{0.5+a})O_{10}(OH)_2 \cdot nH_2O$$

$$\text{(Formula 4)} \qquad M_aSi_4(Fe_{2-a}^{3+}Mg_a)O_{10}(OH)_2 \cdot nH_2O$$

$$\text{(Formula 5)} \qquad M_aSi_4(Fe_{1.67-a}^{3+}Mg_{0.5+a})O_{10}(OH)_2 \cdot nH_2O$$

(In Formulas 3 to 5, M represents a sodium cation, and a is 0.25 to 0.60.)

Usually, montmorillonite has cations between its layers, but the content ratio differs depending on the production area. Examples of the above ions include inorganic cations such as sodium ions, calcium ions, magnesium ions, and potassium ions, and organic cations such as quaternary ammonium ions. From the viewpoint of affinity to water, inorganic cations are preferable, and sodium ions and/or calcium ions are more preferable. Further, it is preferable to use montmorillonite purified by water treatment.

The average particle diameter of montmorillonite is preferably 0.1 to 10 $\mu$m, more preferably 1 to 5 $\mu$m, and still more preferably 1.5 to 3 $\mu$m. The particle aspect ratio of montmorillonite is preferably 10 to 2,000, more preferably 100 to 1,000, and still more preferably 300 to 700. The specific surface area of montmorillonite is preferably 1 to 250 $m^2$/g, more preferably 1 to 100 $m^2$/g, still more preferably 3 to 50 $m^2$/g, and particularly preferably 5 to 30 $m^2$/g.

The average thickness of montmorillonite particles is preferably 0.05 to 30 nm, more preferably 0.1 to 10 nm, and still more preferably 0.5 to 3 nm. The average major diameter of montmorillonite particles is preferably 0.01 to 5 $\mu$m, more preferably 0.05 to 3 $\mu$m, and still more preferably 0.1 to 1 $\mu$m. Here, the average thickness of particles and the average major diameter of particles refer to measured values by atomic force microscopy (AFM), and in the disclosure, measurement is performed using AFM100Plus manufactured by Hitachi High-Tech Corporation.

As montmorillonite, commercially available products such as Kunipia-F and Kunipia-G (manufactured by Kunimine Industries Co., Ltd.) may be used.

<Kaolin>

Kaolin has kaolinite ($Al_2O_3 \cdot 2SiO_2 \cdot H_2O$) or halloysite $Al_2O_3 \cdot 2SiO_2 \cdot 2H_2O$ as a main component, and may be a natural product or a synthetic product. Moreover, depending on differences in manufacturing methods, there exist dry kaolin, wet kaolin, calcined kaolin, and the like, but the kaolin is not limited to any of these.

The average particle diameter of kaolin is preferably 0.1 to 30 $\mu$m, more preferably 0.2 to 20 $\mu$m, and still more preferably 0.3 to 10 $\mu$m from the viewpoint of oxygen barrier property after bending. The aspect ratio of kaolin is preferably 10 to 1,000, more preferably 30 to 500, and still more preferably 50 to 200. The specific surface area of kaolin is preferably 1 to 250 $m^2$/g, more preferably 1 to 100 $m^2$/g, still more preferably 3 to 50 $m^2$/g, and particularly preferably 5 to 30 $m^2$/g.

As kaolin, commercially available products such as Barisurf HX (manufactured by Imerys), NN Kaolin Clay, and ST Kaolin Clay (manufactured by Takehara Chemical Industrial Co., Ltd.) may be used.

<Mica>

As mica, both natural mica and synthetic mica may be used. Natural mica is a scaly base material obtained by crushing ore mica, and the particle diameter and aspect ratio may be controlled by mechanical crushing, cleavage by calcination, and the like. Synthetic mica includes those synthesized by heating industrial raw materials such as $SiO_2$, MgO, $Al_2O_3$, $K_2SiF_6$, $Na_2SiF_6$, and the like, melting at a high temperature of about 1500°C, and cooling to crystallize. Compared to natural mica, synthetic mica has fewer impurities and is uniform in size and thickness. Specifically, fluorophlogopite ($KMg_3AlSi_3O_{10}F_2$), potassium tetrasilicic mica ($KMg_{2.5}AlSi_4O_{10}F_2$), sodium tetrasilicic mica ($NaMg_{2.5}AlSi_4O_{10}F_2$), Na taeniolite ($NaMg_2LiSi_4O_{10}F_2$), LiNa taeniolite ($LiMg_2LiSi_4O_{10}F_2$), and the like are known. From the viewpoint of dispersibility, synthetic mica that is easily cleaved by intercalation is preferable.

The average particle diameter of mica is preferably 30 $\mu$m or less, more preferably 1 to 25 $\mu$m, and still more preferably 5 to 15 $\mu$m from the viewpoint of oxygen barrier property after bending. The aspect ratio of mica is preferably 30 to 200, more preferably 70 to 170, and still more preferably 100 to 150. The specific surface area of mica is preferably 1 to 250 $m^2$/g, more preferably 1 to 100 $m^2$/g, still more preferably 3 to 50 $m^2$/g, and particularly preferably 5 to 30 $m^2$/g.

As mica, commercially available products such as Mica Powder TM series, Mica Powder NCF series (manufactured by Yamaguchi Mica Co., Ltd.), L60M, L100M (manufactured by Seishin Enterprise Co., Ltd.) may be used.

<Additives that may be contained in the barrier layer>

The barrier layer may contain known additives such as isocyanate compounds, silane coupling agents, dispersants, stabilizers, viscosity modifiers, colorants, and the like within a range that does not impair the effects of the disclosure.

<Barrier coating agent>

The barrier coating agent for forming the barrier coat layer preferably contains a hydrophilic resin and an aqueous solvent. Furthermore, each component of the inorganic layered filler may be added to the coating agent individually or in multiple combinations, and additives may be further added as necessary. The barrier coating agent may be obtained, for example, by preparing a resin solution in which a hydrophilic resin is dissolved or dispersed in an aqueous solvent, an aqueous solvent, and the above optional components as necessary in a stirrer equipped with stirring blades, rotating blades, etc., and mixing and stirring. The stirring speed is not particularly limited, and may be performed at 50 to 2000 rpm.

<Aqueous solvent>

The barrier coating agent preferably contains an aqueous solvent. The main component of the aqueous solvent is preferably water, but in addition to water, hydrophilic organic solvents may be used. Specifically, alcohol-based organic solvents, glycol-based organic solvents, and the like may be contained according to printing conditions (speed, plate depth, design, drying temperature, etc.). Here, the main component being water means that the content of water is the highest in the aqueous solvent. Further, hydrophilic organic solvent refers to those that are liquid at 25°C and have a solubility of 1 % by mass or more in water at 25°C.

Examples of the alcohol-based organic solvent include methanol, ethanol, propanol, isopropanol, isobutanol, normal butanol, tertiary butanol, hexanol, octanol, decanol, and the like.

Examples of the glycol-based organic solvent include acetylene diol, ethylene glycol, ethylene glycol monomethyl ether, ethylene glycol monoethyl ether, ethylene glycol monopropyl ether, ethylene glycol monobutyl ether, ethylene glycol monooctyl ether, diethylene glycol, diethylene glycol monoethyl ether, diethylene glycol monopropyl ether, diethylene glycol monobutyl ether, triethylene glycol, triethylene glycol monomethyl ether, triethylene glycol monoethyl ether, triethylene glycol monopropyl ether, triethylene glycol monobutyl ether, propylene glycol, propylene glycol monoethyl ether, propylene glycol monopropyl ether, propylene glycol monobutyl ether, dipropylene glycol, dipropylene glycol monomethyl ether, dipropylene glycol monoethyl ether, dipropylene glycol monopropyl ether, dipropylene glycol monobutyl ether, tripropylene glycol, tripropylene glycol monomethyl ether, tripropylene glycol monoethyl ether, tripropylene glycol monopropyl ether, tripropylene glycol monobutyl ether, dibutyl glycol, and the like. These may be used alone or in combination of two or more types.

<Formation of barrier layer>

The barrier layer may be formed, for example, by printing with a barrier coating agent on the anchor coat layer and then removing volatile components. Examples of printing methods include conventionally known methods such as gravure printing method, flexographic printing method, dipping method, roll coating method, screen printing method, spray method, and the like, but gravure printing method is preferred. For example, the barrier coating agent is diluted with a diluting solvent to a viscosity and concentration suitable for gravure printing, and is supplied to each printing unit alone or in mixture and applied. Thereafter, a barrier coat layer may be obtained by fixing the coating film by drying in an oven or the like.

[Adhesive layer]

The adhesive layer is a layer including a cured product of a polyol and an isocyanate curing agent (I).

The adhesive layer may be formed, for example, by applying a two-component reactive adhesive, which is a mixture of a polyol having a permachor value of 25 to 60 and an isocyanate curing agent (I), on the barrier layer, and drying and curing the adhesive. The form of the adhesive is preferably a dry laminate type adhesive.

The mass per unit area of the adhesive layer is 1.0 to 4.5 $g/m^2$, preferably 1.5 to 4.3 $g/m^2$, and more preferably 2.0 to 4.0 $g/m^2$. In the case of the above range, the oxygen barrier property after bending is further improved, and residual solvent is further reduced.

Further, the ratio of the mass per unit area of the barrier layer to the mass per unit area of the adhesive layer is preferably 70:30 to 15:85, more preferably 55:45 to 22.5:77.5, and still more preferably 40:60 to 20:80. In the case of the ratio of the mass per unit area of the barrier layer to the mass per unit area of the adhesive layer being in the above range, the oxygen barrier property after bending is further improved, and the residual solvent is further reduced.

<Permachor Value of Polyol>

The permachor value of the polyol is 25 to 60, preferably 27 to 50, and more preferably 30 to 40. In the case of the permachor value being 25 or more, the oxygen barrier property after bending is improved. In the case of the permachor value being 60 or less, the laminate strength is improved and the residual solvent is reduced.

In the disclosure, the permachor value of the polyol refers to the permachor value of the residue excluding the terminal OH groups of the polyol. The permachor value has a correlation with gas permeability as shown in (Formula 6), and the larger the permachor value, the smaller the gas permeability.

(Formula 6)

$$P = A \times \exp(-S \times \Pi)$$

P: gas permeability
A: constant specific to each gas (oxygen: $5.0 \times 10^{-9}$)
S: constant specific to each gas (oxygen: 0.112)
$\Pi$: permachor value

The permachor value of the polyol may be calculated using the following (Formula 7), and the permachor value Pn specific to polymer segment n in (Formula 7) may use the values described in Table 1 of Japanese Patent Application Laid-Open Publication No. 2013-129780.
(Formula 7)

[Equation 1]

$$\text{Permachor value of polyol} = \frac{\sum \{(Pn) \times (Mn)\}}{\sum (Mn)}$$

Pn: permachor value specific to polymer segment n
Mn: number of moles of polymer segment n

<Permachor value of cured product of polyol and isocyanate curing agent (I)>

The permachor value of the cured product of the polyol and the isocyanate curing agent is 30 to 70, preferably 35 to 60, and more preferably 40 to 50. In the case of the permachor value being 30 or more, the oxygen barrier property after bending is improved. In the case of the permachor value being 70 or less, the laminate strength is improved and the residual solvent is reduced.

In the disclosure, the permachor value of the cured product of the polyol and the isocyanate curing agent (I) refers to the permachor value of the residue excluding the terminal OH groups of the polyol and the isocyanate curing agent (I). The permachor value of the cured product of the polyol and the isocyanate curing agent (I) may be calculated using the following (Formula 8), and the permachor value Pm specific to isocyanate segment m in (Formula 8) may use the values described in Tables 3 to 7 of Japanese Patent Application Laid-Open Publication No. 2013-129780. It is noted that the isocyanate groups of the isocyanate segment are converted to carbamate groups for calculation.
(Formula 8)

[Equation 2]

$$= \frac{\sum \{(Pn) \times (Mn)\} + \sum \{(Pm) \times (Mm)\}}{\sum (Mn) + \sum (Mm)}$$

Pn: permachor value specific to polymer segment n
Pm: permachor value specific to isocyanate segment m
Mn: number of moles of polymer segment n
Mm: number of moles of isocyanate segment n

<Polyol>

The polyol may satisfy a permachor value of 25 to 60, and examples include polyester polyol, polyether polyol, polyurethane polyol, polyesteramide polyol, acrylic polyol, polycarbonate polyol, polycaprolactone polyol, polyvalerolactone polyol, polyolefin polyol, polyhydroxyalkane, castor oil, or mixtures thereof, as well as glycols such as ethylene glycol, propylene glycol, 1,3-propanediol, 1,4-butanediol, 1,5-pentanediol, 3-methyl-5-pentanediol, 1,6-hexanediol, neopentyl glycol, methylpentane glycol, triethylene glycol, tetraethylene glycol, dipropylene glycol, bishydroxyethoxybenzene, 1,4-cyclohexanediol, 1,4-cyclohexanedimethanol, triethylene glycol; polyalkylene glycols having a number average molecular weight of 200 to 3,000; trifunctional or tetrafunctional aliphatic alcohols such as glycerin, trimethylolpropane, and pentaerythritol; and polyols obtained by adding the above glycols or polyols to the above trifunctional or tetrafunctional aliphatic alcohols. These may be used alone or in combination of two or more types. Among these, polyester polyol and polyether polyol are preferable, and polyester polyol is more preferable. The mass ratio of polyester polyol in the polyol is preferably 50 to 100 % by mass, more preferably 70 to 100 % by mass, and still more preferably 90 to 100 % by mass in 100 % by mass of the polyol. In the case of the above range, the oxygen barrier property after bending is further improved, and residual solvent is further reduced.

Examples of the polyester polyol include polyester polyols obtained by esterification reaction of aromatic dibasic acids such as terephthalic acid, isophthalic acid, phthalic anhydride, tetrahydrophthalic anhydride, hexahydrophthalic anhydride, and naphthalenedicarboxylic acid; aliphatic dibasic acids such as adipic acid, azelaic acid, sebacic acid, succinic acid, glutaric acid, and maleic anhydride; alicyclic dibasic acids such as itaconic anhydride, or their dialkyl esters, or mixtures thereof (hereinafter also referred to as carboxyl group components) with diols such as ethylene glycol, propylene glycol, diethylene glycol, dipropylene glycol, triethylene glycol, butylene glycol, neopentyl glycol, dineopentyl glycol, trimethylolpropane, glycerin, 1,6-hexanediol, 1,4-butanediol, 1,4-cyclohexanedimethanol, 3-methyl-1,5-pentanediol, 3,3'-dimethylolheptane, 1,9-nonanediol, polyoxyethylene glycol, polyoxypropylene glycol, polytetramethylene ether glycol, polyether polyol, polycarbonate polyol, polyolefin polyol, acrylic polyol, polyurethane polyol, or mixtures thereof (hereinafter also referred to as hydroxyl group components); or polyester polyols obtained by ring-opening polymerization of lactones such as polycaprolactone, polyvalerolactone, and poly($\beta$-methyl-$\gamma$-valerolactone). Two or more types of the carboxyl group components and hydroxyl group components may be used in combination. Among these, it is preferable to contain aromatic dibasic acids and aliphatic dibasic acids, and it is more preferable to contain aromatic dibasic acids. In the case of containing the above, the oxygen barrier property after bending and low residual solvent are further improved. Among the aromatic dibasic acids, it is preferable to contain isophthalic acid and terephthalic acid, it is still more preferable to contain isophthalic acid, and among the aliphatic dibasic acids, it is preferable to contain succinic acid, adipic acid, and sebacic acid, and it is more preferable to contain sebacic acid. As the combination of the dibasic acids, a combination of aromatic dibasic acids and aliphatic dibasic acids is preferable, combinations of isophthalic acid and sebacic acid, and terephthalic acid and sebacic acid are more preferable, and the combination of isophthalic acid and sebacic acid is still more preferable.

The content of aromatic dibasic acid-derived structures in the polyester polyol is preferably 5 to 75 % by mass, more preferably 15 to 55 % by mass, and still more preferably 25 to 35 % by mass. In the case of the above range, the oxygen barrier property after bending and low residual solvent are further improved. Moreover, the content of linear dibasic acid-derived structures in the polyester polyol is preferably 1 to 60 % by mass, more preferably 5 to 40 % by mass, and still more preferably 10 to 20 % by mass. In the case of the above range, the oxygen barrier property after bending is further improved, and residual solvent is further reduced.

Examples of the polyether polyol include polyether diol, polyether triol, and the like. For example, polyether diol obtained by polymerizing oxirane compounds such as ethylene oxide, propylene oxide, butylene oxide, and tetrahydrofuran using bifunctional low molecular weight polyols such as water, ethylene glycol, and propylene glycol as initiators; polyether triol obtained by polymerizing oxirane compounds such as ethylene oxide, propylene oxide, butylene oxide, and tetrahydrofuran using low molecular weight triols such as trimethylolpropane and glycerin as initiators; may be mentioned.

The polyol containing the polyester polyol-derived constituent unit or polyether polyol-derived constituent unit described above may be a polyester urethane polyol or polyether urethane polyol obtained by further reacting the polyester polyol or polyether polyol with diisocyanate, or may be one obtained by further reacting with acid anhydride. Examples of the diisocyanate include 2,4-tolylene diisocyanate, 2,6-tolylene diisocyanate, xylylene diisocyanate, diphenylmethane diisocyanate, isophorone diisocyanate, 1,5-naphthalene diisocyanate, hexamethylene diisocyanate, and hydrogenated diphenylmethane diisocyanate. Examples of the acid anhydride include pyromellitic anhydride, mellitic anhydride, trimellitic anhydride, and trimellitic acid ester anhydride. Examples of the trimellitic acid ester anhydride include ethylene glycol bisanhydrotrimellitate and propylene glycol bisanhydrotrimellitate.

The mass average molecular weight (Mw) of the polyol is preferably 2,000 to 80,000, more preferably 5,000 to 60,000, and still more preferably 10,000 to 60,000.
Further, by using a polyol having a molecular weight distribution (Mw/Mn) of 1.5 to 10, the leveling property during adhesive coating and the laminate strength between each layer may be improved. In particular, in the case of the polyol containing polyether polyol-derived constituent units, the molecular weight distribution (Mw/Mn) is preferably 3.0 to 10.0, and more preferably 3.0 to 8.0. In the case of containing polyester polyol-derived constituent units, the molecular weight distribution (Mw/Mn) is preferably 1.5 to 5.0, and more preferably 2.0 to 4.0.

The acid value of the polyol is not particularly limited, but is preferably 0 to 50 mgKOH/g, and more preferably 0 to 40 mgKOH/g. The hydroxyl number of the polyol is not particularly limited, but is preferably 1 to 200 mgKOH/g, and more preferably 3 to 150 mgKOH/g.

(Isocyanate curing agent (I))

The isocyanate curing agent (I) functions as a curing agent in the reactive adhesive, and may be used without limitation as long as it is for ordinary two-component reactive adhesives and contains functional groups having reactivity with hydroxyl groups. By having isocyanate groups, the adhesive strength and cohesive force of the adhesive are increased, and curing is possible at low temperatures around room temperature.

As the isocyanate curing agent (I), diisocyanates or urethane prepolymers that are reaction products of diisocyanates and polyols are preferred, and as such diisocyanates, various known aromatic, aliphatic, or alicyclic diisocyanates may be used. Examples include 1,5-naphthylene diisocyanate, 4,4'-diphenylmethane diisocyanate, 4,4'-diphenyldimethylmethane diisocyanate, 4,4'-dibenzyl isocyanate, dialkyldiphenylmethane diisocyanate, tetraalkyldiphenylmethane diisocyanate, 1,3-phenylene diisocyanate, 1,4-phenylene diisocyanate, tolylene diisocyanate, butane-1,4-diisocyanate, hexamethylene diisocyanate, isopropylene diisocyanate, methylene diisocyanate, 2,2,4-trimethylhexamethylene diisocyanate, 2,4,4-trimethylhexamethylene diisocyanate, cyclohexane-1,4-diisocyanate, xylylene diisocyanate, isophorone diisocyanate, lysine diisocyanate, dicyclohexylmethane-4,4'-diisocyanate, 1,3-bis(isocyanatemethyl)cyclohexane, methylcyclohexane diisocyanate, m-tetramethylxylylene diisocyanate, and dimer diisocyanates obtained by converting the carboxyl groups of dimer acids into isocyanate groups. These may be used alone or in combination of two or more.

As the isocyanate curing agent (I), urethane prepolymers having isocyanate groups at the terminals may be suitably used. Among these, from the viewpoint of yellowing and imparting flexibility for improving laminate strength, the use of aliphatic diisocyanates such as hexamethylene diisocyanate and xylylene diisocyanate, and alicyclic diisocyanates such as isophorone diisocyanate is preferred, and for compatibility with retort resistance, trifunctional or higher polyisocyanate compounds such as adduct forms of trimethylolpropane, isocyanurate forms, and biuret forms are preferred.

In the adhesive layer, the functional group equivalent ratio NCO/OH of hydroxyl groups derived from polyol and isocyanate groups derived from isocyanate resin is preferably 1.5 to 8.0, and more preferably 2.0 to 5.0. In addition, other components known for adhesives may be blended in the main agent or curing agent.

(Reaction accelerator)

The adhesive may contain, for example, a reaction accelerator. Examples of reaction accelerators include metal-based catalysts such as dibutyltin diacetate, dibutyltin dilaurate, dioctyltin dilaurate, and dibutyltin dimaleate; tertiary amines such as 1,8-diaza-bicyclo(5,4,0)undecene-7, 1,5-diazabicyclo(4,3,0)nonene-5, and 6-dibutylamino-1,8-diazabicyclo(5,4,0)undecene-7; reactive tertiary amines such as triethanolamine; and titanium-based, zinc-based, and bismuth-based catalysts. These may be used alone or in any combination of two or more types. Among these, the use of titanium-based, zinc-based, or bismuth-based reaction accelerators is preferred because they excel in the aging effect of the adhesive and the content resistance of the packaging material.

(Silane coupling agent)

The adhesive may contain a silane coupling agent from the viewpoint of improving adhesive strength particularly to metal-based materials such as metal foil. Examples of silane coupling agents include trialkoxysilanes having vinyl groups such as vinyltriethoxysilane and vinyltriethoxysilane; trialkoxysilanes having amino groups such as 3-aminopropyltriethoxysilane and N-(2-aminoethyl)-3-aminopropyltrimethoxysilane; and trialkoxysilanes having glycidyl groups such as 3-glycidoxypropyltrimethoxysilane, 2-(3,4-epoxycyclohexyl)-ethyltrimethoxysilane, and 3-glycidoxypropyltriethoxysilane. These may be used alone or in any combination of two or more types. The content of the silane coupling agent is preferably 0.1 to 5 % by mass and more preferably 0.2 to 3 % by mass with respect to all polyol components. By setting the content within the above range, adhesive strength particularly to metal-based materials may be further improved.

(Phosphoric acid or phosphoric acid derivative)

The adhesive may contain phosphoric acid or a phosphoric acid derivative from the viewpoint of improving adhesive strength particularly to metal-based materials such as metal foil. The phosphoric acid may be any that has at least one free oxygen acid, and examples include phosphoric acids such as hypophosphorous acid, phosphorous acid, orthophosphoric acid, and hypophosphoric acid; and condensed phosphoric acids such as metaphosphoric acid, pyrophosphoric acid, tripolyphosphoric acid, polyphosphoric acid, and ultraphosphoric acid. Further, examples of phosphoric acid derivatives include those obtained by partially esterifying the above-mentioned phosphoric acids with alcohols while leaving at least one free oxygen acid. Examples of the alcohols include aliphatic alcohols such as methanol, ethanol, ethylene glycol, and glycerin; and aromatic alcohols such as phenol, xylenol, hydroquinone, catechol, and phloroglucinol. These may be used alone or in any combination of two or more types. The content of phosphoric acid or its derivative is preferably 0.01 to 10 % by mass, more preferably 0.05 to 5 % by mass, and still more preferably 0.05 to 1 % by mass with respect to the solid content of the two-component reactive adhesive.

(Leveling agent, defoaming agent)

The adhesive may contain known leveling agents or defoaming agents. Examples of leveling agents include polyether-modified polydimethylsiloxane, polyester-modified polydimethylsiloxane, aralkyl-modified polymethylalkylsiloxane, polyester-modified hydroxyl group-containing polydimethylsiloxane, polyether ester-modified hydroxyl group-containing polydimethylsiloxane, acrylic copolymers, methacrylic copolymers, polyether-modified polymethylalkylsiloxane, alkyl acrylate copolymers, alkyl methacrylate copolymers, and lecithin. Examples of defoaming agents include silicone resins, silicone solutions, and copolymers of alkyl vinyl ether, alkyl acrylate, and alkyl methacrylate. These may be used alone or in any combination of two or more types. The content of each of the leveling agent and defoaming agent is preferably 0.001 to 1 % by mass, more preferably 0.005 to 0.5 % by mass with respect to the solid content of the two-component reactive adhesive.

(Other additives)

Various additives may be blended into the adhesive within a range that does not impair the effects of the disclosure. Examples of additives include inorganic fillers such as silica, alumina, mica, talc, aluminum flakes, and glass flakes, layered inorganic compounds, stabilizers (antioxidants, heat stabilizers, ultraviolet absorbers, hydrolysis inhibitors, etc.), rust inhibitors, thickeners, plasticizers, antistatic agents, lubricants, antiblocking agents, colorants, fillers, crystal nucleating agents, and catalysts for adjusting curing reactions.

(Organic solvent used in adhesive)

The adhesive may be diluted with a solvent to adjust to an appropriate viscosity. As the organic solvent used in the reactive adhesive, those that are inert to the polyisocyanate component, such as ester-based solvents like ethyl acetate, ketone-based solvents like methyl ethyl ketone, and aromatic hydrocarbon-based solvents like toluene and xylene, are suitably used and may be appropriately selected for use.

[Anchor coat layer]

The packaging material of the disclosure preferably further includes an anchor coat layer. The anchor coat layer preferably contains a urethane resin. The anchor coat layer is preferably positioned between the base material 1 and the barrier layer, and may be formed by an anchor coating agent described later.
The mass per unit area of the anchor coat layer is preferably 0.1 to 5 g/m$^2$, more preferably 0.15 to 3 g/m$^2$, and still more preferably 0.2 to 1 g/m$^2$. In the case of the mass per unit area of the anchor coat layer being in the above range, the oxygen barrier property and laminate strength during bending become better. From the viewpoint of improving the oxygen barrier property after bending and the laminate strength, the mass ratio of the anchor coat layer to the barrier layer is preferably 0.1:1 to 2:1, more preferably 0.15:1 to 1:1, and still more preferably 0.2:1 to 0.6:1.

<Urethane resin>

The urethane resin preferably has urea bonds. As the urethane resin having urea bonds, for example, a urethane urea resin obtained by reacting a terminal isocyanate urethane prepolymer composed of a polyol and a polyisocyanate with a polyamine chain extender may be raised and is suitably used.
The content of the urethane resin is preferably 20 to 90 % by mass in the total mass of the anchor coat layer, more preferably 40 to 85 % by mass, and still more preferably 60 to 80 % by mass. This is because the oxygen barrier property after bending is further improved.

(Urea bond concentration)

In the case of the urethane resin having urea bonds, the urea bond concentration is preferably 0.1 to 1.3 mmol/g, more preferably 0.3 to 1.15 mmol/g, and still more preferably 0.6 to 0.9 mmol/g. In the case of the urea bond concentration of the urethane resin being 0.1 mmol/g or more, the laminate strength and oxygen barrier property after bending are further improved. In the case of the urea bond concentration of the urethane resin being 1.3 mmol/g or less, the laminate strength, residual solvent, and oxygen barrier property after bending are further improved.

Here, the urea bond concentration is a value expressed as follows. In the case of synthesizing a prepolymer having terminal isocyanate groups under conditions such that (NCO molar number/OH molar number) > 1, followed by chain extension with polyamine, and the urethane resin has amino groups at the terminals, the urea bond concentration is expressed by the following (Formula 9).

(Formula 9) Urea bond concentration (mmol/g) = [Total isocyanate group molar number (mmol) - Total hydroxyl group molar number (mmol)]/Total solid content mass (g)                    (Formula 9)

In the case of synthesizing a prepolymer having terminal isocyanate groups under conditions such that (NCO molar number/OH molar number) > 1, followed by chain extension with polyamine, and the urethane resin has isocyanate groups at the terminals, the urea bond concentration is expressed by the following (Formula 10).

Urea bond concentration (mmol/g) = (Total amino group molar number (mmol))/Total solid content mass (g)                    (Formula 10)

Here, the total amino group molar number refers to the total molar number of primary or secondary amino groups that the polyamine used to react with the prepolymer having terminal isocyanate groups to generate urea bonds has.

(Urethane bond concentration)

The urethane bond concentration of the urethane resin is preferably 0.1 to 1.3 mmol/g, more preferably 0.3 to 1.15 mmol/g, and still more preferably 0.6 to 0.9 mmol/g. In the case of the urethane bond concentration of the urethane resin being in the above range, the oxygen barrier property and laminate strength after bending become better.

Here, the urethane bond concentration is a value expressed as follows. In the case of (NCO molar number/OH molar number) > 1 in the raw materials constituting the urethane resin, the urethane bond concentration is expressed by the following (Formula 11).

Urethane bond concentration (mmol/g) = Total hydroxyl group molar number (mmol)/Total solid content mass (g)                    (Formula 11)

Here, the total hydroxyl group molar number refers to the total molar number of hydroxyl groups that polyols and the like used in the reaction to form urethane have. Further, the total solid content refers to the total mass of non-volatile components that become the urethane resin. In the case of (NCO molar number/OH molar number) < 1 in the raw materials constituting the urethane resin, the urethane bond concentration is expressed by the following (Formula 12).

Urethane bond concentration (mmol/g) = Total isocyanate group molar number (mmol)/Total solid content mass (g)                    (Formula 12)

Here, the total isocyanate group molar number refers to the total molar number of isocyanate groups that the polyisocyanate used in the reaction to form urethane has.

The mass average molecular weight of the urethane resin is preferably 10,000 to 100,000, more preferably 20,000 to 85,000, and still more preferably 30,000 to 70,000. In the case of the mass average molecular weight of the urethane resin being in the above range, the oxygen barrier property after bending becomes better.

The glass transition temperature of the urethane resin is preferably -80 to 20°C, more preferably -60 to 0°C, and still more preferably -40 to -5°C. In the case of the glass transition temperature of the urethane resin being in the above range, the oxygen barrier property after bending becomes better.

The amine value of the urethane resin is preferably 0.5 to 20 mgKOH/g, and more preferably 1 to 15 mgKOH/g. In the case of the amine value of the urethane resin being in the above range, the oxygen barrier property after bending becomes better.

The hydroxyl number of the urethane resin is preferably 0.5 to 30 mgKOH/g, and more preferably 1 to 20 mgKOH/g. In the case of the hydroxyl number of the urethane resin being in the above range, the oxygen barrier property after bending becomes better.

The urethane resin preferably contains structural units derived from polyester polyol, and the content thereof is preferably 5 to 80 % by mass in 100 % by mass of urethane resin solid content, and more preferably 30 to 70 % by mass. In the case of the content of structural units derived from polyester polyol being in the above range, the oxygen barrier property after bending becomes better.

There is no particular limitation on the method for manufacturing the urethane resin, and known methods may be used. For example, a urethane resin obtained by reacting a terminal isocyanate urethane prepolymer composed of polyol and polyisocyanate with polyamine and, if necessary, a polymerization inhibitor is preferred.

More specifically, for example, a prepolymer method in which polyol and polyisocyanate are reacted using a solvent inert to isocyanate groups as necessary, and further using a urethanization catalyst if necessary, at a temperature of 50°C to 150°C (urethanization reaction) to produce a prepolymer having isocyanate groups at terminals, and then this prepolymer is reacted with polyamine at 10 to 60°C to obtain a urethane resin, or a one-shot method in which high molecular weight polyol, polyisocyanate, and polyamine (and a polymerization inhibitor as necessary) are reacted in one step to obtain a urethane resin, and other known methods may be used. Further, polyamine may be used in the urethanization reaction of polyol and polyisocyanate.

Examples of the polyol include polyester polyol, polyether polyol, polycaprolactone diol, polycarbonate polyol, polyolefin polyol, castor oil polyol, hydrogenated castor oil polyol, dimer diol, and hydrogenated dimer diol. Among these, polyester polyol is preferred.

Examples of the polyester polyol include condensates obtained by esterification reaction between dibasic acids and diols. Examples of the dibasic acid include adipic acid, phthalic anhydride, isophthalic acid, terephthalic acid, maleic acid, fumaric acid, succinic acid, oxalic acid, malonic acid, pimelic acid, azelaic acid, sebacic acid, suberic acid, glutaric acid, 1,4-cyclohexyldicarboxylic acid, dimer acid, hydrogenated dimer acid, and the like. Among these, sebacic acid and adipic acid are particularly preferred. Examples of the diol include ethylene glycol, diethylene glycol, triethylene glycol, propylene glycol, 1,3-propanediol, 1,4-butanediol, 1,3-butanediol, 1,6-hexanediol, 1,8-octanediol, 1,9-nonanediol, neopentyl glycol, 3-methyl-1,5-pentanediol, 2-methyl-1,3-propanediol, 3,3,5-trimethylpentanediol, 2,4-diethyl-1,5-pentanediol, 1,12-octadecanediol, 1,2-alkanediol, 1,3-alkanediol, 1-monoglyceride, 2-monoglyceride, 1-monoglycerin ether, 2-monoglycerin ether, dimer diol, hydrogenated dimer diol, and the like. Among these, polyester polyols composed of diols having a branched structure and dibasic acids are preferred. The branched structure means a diol having an alkyl side chain in which at least one hydrogen atom of the alkylene group contained in the diol is substituted by an alkyl group, and examples include propylene glycol, 1,3-butanediol, 2-methyl-1,3-propanediol, neopentyl glycol, 1,4-pentanediol, 3-methyl-1,5-pentanediol, 2,5-hexanediol, 2-methyl-1,4-pentanediol, 2,4-diethyl-1,5-pentanediol, 2-butyl-2-ethyl-1,3-propanediol, 2-methyl-1,8-octanediol, 2,2,4-trimethyl-1,3-pentanediol, 2,2,4-trimethyl-1,6-hexanediol, and the like. These are particularly preferred for improving printing suitability, printing effect, and laminate strength. These polyester polyols may be used alone or in combination of two or more types. Further, the polyester polyol may be used in combination with a polyol having three or more hydroxyl groups and/or a polyvalent carboxylic acid having three or more carboxyl groups.

The number average molecular weight of the polyester polyol is preferably 500 to 10,000. The number average molecular weight of the polyol is obtained by (Formula 13). The acid value of the polyester polyol is preferably 1.0 mgKOH/g or less, and more preferably 0.5 mgKOH/g or less.

Number average molecular weight of polyol = $1000 \times 56.1 \times$ valence of hydroxyl group/hydroxyl number (Formula 13)

In the production of urethane resin, the polyol may contain low molecular weight diol. Such low molecular weight diol preferably has a molecular weight of 50 to 800, and examples include ethylene glycol, diethylene glycol, triethylene glycol, propylene glycol, 1,3-propanediol, 1,4-butanediol, 1,3-butanediol, 1,6-hexanediol, 1,8-octanediol, 1,9-nonanediol, neopentyl glycol, 3-methyl-1,5-pentanediol, 2-methyl-1,3-propanediol, 3,3,5-trimethylpentanediol, 2,4-diethyl-1,5-pentanediol, 1,12-octadecanediol, 1,2-alkanediol, 1,3-alkanediol, 1-monoglyceride, 2-monoglyceride, 1-monoglycerin ether, 2-monoglycerin ether, dimer diol, hydrogenated dimer diol, and the like.

Examples of the polyisocyanate include various known aromatic diisocyanates, aliphatic diisocyanates, alicyclic diisocyanates, and the like that are generally used in the production of urethane resins. Specific examples include 1,5-naphthylene diisocyanate, 4,4'-diphenylmethane diisocyanate (MDI), 4,4'-diphenyldimethylmethane diisocyanate, 4,4'-dibenzyl isocyanate, dialkyl diphenylmethane diisocyanate, tetraalkyl diphenylmethane diisocyanate, 1,3-phenylene diisocyanate, 1,4-phenylene diisocyanate, tolylene diisocyanate, butane-1,4-diisocyanate, hexamethylene diisocyanate, isopropylene diisocyanate, methylene diisocyanate, 2,2,4-trimethylhexamethylene diisocyanate, lysine diisocyanate, cyclohexane-1,4-diisocyanate, xylylene diisocyanate, isophorone diisocyanate, dimeryl diisocyanate, dicyclohexylmethane-4,4'-diisocyanate, 1,3-bis(isocyanatemethyl)cyclohexane, methylcyclohexane diisocyanate, norbornane diisocyanate, m-tetramethylxylylene diisocyanate, 4,4-diphenylmethane diisocyanate, bis-chloromethyl-diphenylmethane-diisocyanate, 2,6-diisocyanate-benzyl chloride, and dimer diisocyanates obtained by converting the carboxyl groups of dimer acids into isocyanate groups. These may form trimers to have an isocyanurate ring structure. These polyisocyanates may be used alone or in combination of two or more. Among these, tolylene diisocyanate, isophorone diisocyanate, xylylene diisocyanate, hydrogenated xylylene diisocyanate, hexamethylene diisocyanate, and isocyanurate of hexamethylene diisocyanate are preferable.

The polyamine is not limited to the following, but preferably has a molecular weight of 500 or less, and examples include diamine-based and polyfunctional amine-based compounds such as ethylenediamine, propylenediamine, hexamethylenediamine, pentamethylenediamine, isophoronediamine, dicyclohexylmethane-4,4'-diamine, p-phenylenediamine and other diamines, as well as diamines having hydroxyl groups such as 2-hydroxyethylethylenediamine, 2-hydroxyethylpropylenediamine, 2-hydroxyethylpropylenediamine, di-2-hydroxyethylethylenediamine, di-2-hydroxyethylenediamine, di-2-hydroxyethylpropylenediamine, 2-hydroxypropylethylenediamine, di-2-hydroxypropylethylenediamine, and di-2-hydroxypropylethylenediamine. These polyamines may be used alone or in combination of two or more. In particular, the urethane resin preferably contains constituent units derived from polyfunctional polyamines having three or more functional groups, and specific examples of the polyfunctional polyamine include diethylenetriamine, iminobispropylamine (IBPA, 3,3'-diaminodipropylamine), triethylenetetramine, N-(3-aminopropyl)butane-1,4-diamine (spermidine), 6,6-iminodihexylamine, 3,7-diazanonane-1,9-diamine, and N,N'-bis(3-aminopropyl)ethylenediamine. The polyfunctional polyamine preferably has three amino groups. Furthermore, it is preferably used in combination with a diamine. Among these, isophoronediamine, hexamethylenediamine, and iminobispropylamine are preferable.

The ratio of the total molar number of amino groups in the polyamine to the molar number of isocyanate groups in the prepolymer is preferably 1.01 to 2.00, and more preferably 1.03 to 1.06.

Further, a monovalent active hydrogen compound may be used as a polymerization inhibitor for the purpose of excessive reaction termination. Such compounds are not particularly limited as long as they are monoamine compounds having primary or secondary amino groups, and examples include dialkylamines such as di-n-butylamine and amino alcohols such as 2-ethanolamine. Furthermore, particularly in the case of introducing carboxyl groups into the urethane resin, amino acids such as glycine and L-alanine may be used as polymerization inhibitors. In the case of using a polymerization inhibitor, the chain extension reaction may be performed by using the polymerization inhibitor and the chain extender (polyamine) together, or polymerization termination may be performed by adding the polymerization inhibitor alone after performing the chain extension reaction to some extent with the chain extender. On the other hand, molecular weight control is possible without using a polymerization inhibitor, but in this case, a method of adding the prepolymer to a solution containing the chain extender is preferable from the viewpoint of reaction control. As the polymerization inhibitor, amino alcohols are preferable, and the content thereof is preferably in a ratio of 0.01 to 2.0 % by mass with respect to 100 % by mass of the urethane resin.

In producing the prepolymer, the amounts of the polyol and polyisocyanate are preferably set such that the NCO/OH ratio, which is the ratio of the molar number of isocyanate groups in the polyisocyanate to the total molar number of hydroxyl groups in the polymer polyol, is in the range of NCO/OH = 1.1 to 3.0. More preferably, the range is NCO/OH = 1.3 to 2.5.

Further, it is preferable to use an organic solvent in the synthesis of the prepolymer from the viewpoint of reaction control. As the organic solvent, an organic solvent that is inert to isocyanate groups is preferable, and examples include ketones such as acetone, methyl ethyl ketone, methyl isobutyl ketone, and cyclohexanone; ethers such as dioxane and tetrahydrofuran; and esters such as ethyl acetate, butyl acetate, and propyl acetate. These may be used alone or as a mixed solvent of two or more types.

Furthermore, a catalyst may also be used in the synthesis of the prepolymer. Examples of catalysts include tertiary amine catalysts such as triethylamine and dimethylaniline; and metal catalysts such as tin and zinc. These catalysts may usually be used in a range of 0.001 to 1 mol% with respect to the polyol compound.

<Resin used in combination with urethane resin>

The anchor coat layer preferably contains, in addition to the urethane resin, combined resins such as vinyl chloride resin, polyvinyl acetal resin, cellulose resin, and polyamide resin. Among these, the combined resin is preferably vinyl chloride resin and/or polyvinyl acetal resin, and more preferably vinyl chloride resin. The mass ratio of the urethane resin to the combined resin is preferably 3:7 to 9.9:0.1, more preferably 5:5 to 9.5:0.5, and even more preferably 7:3 to 9:1.

<Vinyl chloride resin>

The vinyl chloride resin includes a structure formed by polymerizing monomers having unsaturated double bonds (excluding vinyl chloride) and vinyl chloride monomers. As the vinyl chloride resin, for example, vinyl chloride-acrylic copolymer resin and vinyl chloride-vinyl acetate copolymer resin are preferably mentioned.

<Vinyl chloride-acrylic copolymer resin>

The vinyl chloride-acrylic copolymer resin has a copolymer of vinyl chloride and acrylic monomer as a main component, and the acrylic monomer is a monomer having an acrylic group or methacrylic group, and preferably contains an acrylic monomer having a hydroxyl group. (Hereinafter, "acrylic or methacrylic" may be referred to as "(meth)acrylic".)

The vinyl chloride-acrylic copolymer resin may be a block copolymer or random copolymer of vinyl chloride and acrylic monomer, or may be a graft copolymer in which acrylic monomer is grafted to side chains of polyvinyl chloride.

The mass average molecular weight of the vinyl chloride-acrylic copolymer resin is preferably 10,000 to 100,000, and more preferably 30,000 to 70,000. The glass transition temperature of the vinyl chloride-acrylic copolymer resin is preferably 50 to 90°C, more preferably 55 to 85°C, and even more preferably 65 to 80°C. The hydroxyl acid value of the vinyl chloride-acrylic copolymer resin is preferably 10 to 120 mgKOH/g, more preferably 20 to 110 mgKOH/g, even more preferably 30 to 100 mgKOH/g, and particularly preferably 40 to 80 mgKOH/g. The content of vinyl chloride-derived structure in the vinyl chloride-acrylic copolymer resin is preferably 70 to 95 % by mass in 100 % by mass of vinyl chloride-acrylic copolymer resin solid content.

As the (meth)acrylic monomer having a hydroxyl group, hydroxyalkyl (meth)acrylate is mentioned, including 2-hydroxyethyl (meth)acrylate, 2-hydroxypropyl (meth)acrylate, 3-hydroxypropyl (meth)acrylate, 2-hydroxybutyl (meth)acrylate, 3-hydroxybutyl (meth)acrylate, 4-hydroxybutyl (meth)acrylate, 6-hydroxyhexyl (meth)acrylate, 8-hydroxyoctyl (meth)acrylate and other hydroxyalkyl (meth)acrylate esters, glycol mono(meth)acrylates such as polyethylene glycol mono(meth)acrylate, polypropylene glycol mono(meth)acrylate, and 1,4-cyclohexanedimethanol mono(meth)acrylate, caprolactone-modified (meth)acrylate, hydroxyethyl acrylamide, and the like. Among these, 2-hydroxyethyl (meth)acrylate, 4-hydroxybutyl (meth)acrylate, and 2-hydroxypropyl (meth)acrylate are preferred. These may be used alone or in combination of two or more.

The (meth)acrylic monomer may contain alkyl (meth)acrylate ester. The number of carbon atoms in the alkyl group in the alkyl (meth)acrylate ester is preferably 1 to 20. Examples of the alkyl acrylate ester include methyl (meth)acrylate, ethyl (meth)acrylate, propyl (meth)acrylate, butyl (meth)acrylate, pentyl (meth)acrylate, hexyl (meth)acrylate, cyclohexyl (meth)acrylate, 2-ethylhexyl (meth)acrylate, isooctyl (meth)acrylate, decyl (meth)acrylate, dodecyl (meth)acrylate, tetradecyl (meth)acrylate, hexadecyl (meth)acrylate, and octadecyl (meth)acrylate. The alkyl group may have an aromatic ring structure substituted with an aryl group or the like. These may be used alone or in combination of two or more.

As the vinyl chloride-acrylic copolymer resin, for example, commercially available products such as Solbin A type series (manufactured by Shin-Etsu Chemical Co., Ltd.) may be used.

<Vinyl chloride-vinyl acetate copolymer resin>

The vinyl chloride-vinyl acetate copolymer resin is a resin in which at least vinyl chloride and vinyl acetate are copolymerized, and its mass average molecular weight is preferably 5,000 to 100,000, more preferably 20,000 to 70,000. In 100 % by mass of solid content of the vinyl chloride-vinyl acetate copolymer resin, the content of structures derived from vinyl acetate monomer is preferably 1 to 30 % by mass, and the content of structures derived from vinyl chloride monomer is preferably 70 to 95 % by mass. Further, since the vinyl chloride-vinyl acetate copolymer resin has improved solubility in organic solvents, those containing hydroxyl groups derived from vinyl alcohol originating from saponification reaction or copolymerization are more preferable, and the hydroxyl number thereof is preferably 20 to 200 mgKOH/g. The glass transition temperature of the vinyl chloride-vinyl acetate copolymer resin is preferably 50°C to 90°C.

As the vinyl chloride-acrylic copolymer resin, commercially available products such as Solbin C type series (manufactured by Shin-Etsu Chemical Co., Ltd.) may be used.

<Polyvinyl acetal resin>

The polyvinyl acetal resin is obtained by acetalizing polyvinyl alcohol with an aldehyde such as butyraldehyde, and preferably contains vinyl alcohol units, vinyl acetate units, and acetal ring units. For the acetalization reaction, known aldehydes such as formaldehyde and acetaldehyde may be used, and two or more types of aldehydes may also be used. Examples of the polyvinyl acetal resin include polyvinyl formal, polyvinyl acetal, and polyvinyl butyral, with polyvinyl butyral being preferable.

The content of acetal rings in the polyvinyl acetal resin is preferably 60 to 90 % by mass in 100 % by mass of the polyvinyl acetal resin. In the case of the content of acetal rings being in the above range, the laminate strength is further improved. The content of vinyl alcohol units in the polyvinyl acetal resin is preferably 5 to 30 % by mass, more preferably 15 to 25 % by mass in 100 % by mass of the polyvinyl acetal resin. In the case of the content of vinyl alcohol units being in the above range, the laminate strength is further improved. The content of vinyl acetate units in the polyvinyl acetal resin is preferably 0.5 to 10 % by mass, more preferably 1 to 5 % by mass in 100 % by mass of the polyvinyl acetal resin. In the case of the content of vinyl acetate units being in the above range, the laminate strength is further improved.

The mass average molecular weight of the polyvinyl acetal resin is preferably 25,000 to 200,000, more preferably 40,000 to 150,000, and even more preferably 70,000 to 120,000. In the case of the mass average molecular weight of the polyvinyl acetal resin being in the above range, the laminate strength becomes good. The glass transition temperature of the polyvinyl acetal resin is preferably 50 to 80°C, more preferably 60 to 75°C. In the case of the glass transition temperature of the polyvinyl acetal resin being in the above range, the laminate strength becomes better.

As the polyvinyl acetal resin, commercially available products such as Mowital series (manufactured by Kuraray Co., Ltd., polyvinyl butyral resin), S-LEC KX series (manufactured by Sekisui Chemical Co., Ltd., polyvinyl acetal resin), and Vinylec series (manufactured by JNC Corporation, polyvinyl formal) may be used.

<Inorganic pigment>

Since the oxygen barrier property after bending is improved, the anchor coat layer preferably contains an inorganic pigment. Examples of the inorganic pigment include titanium oxide, zinc oxide, zinc sulfide, chromium oxide, aluminum particles, mica, bronze powder, chrome vermillion, yellow lead, cadmium yellow, cadmium red, ultramarine, prussian blue, red iron oxide, yellow iron oxide, iron black, silica, barium sulfate, kaolin clay, calcium carbonate, magnesium carbonate, and the like. Silica, barium sulfate, kaolin clay, calcium carbonate, and magnesium carbonate are preferred, and among these, silica is particularly preferred.

The content of the inorganic pigment is preferably 0.5 to 15 % by mass, more preferably 1 to 10 % by mass, and even more preferably 3 to 7 % by mass in 100 % by mass of the anchor coat layer.

(Isocyanate curing agent (I))

Since the laminate strength and the oxygen barrier property after bending are improved, the anchor coat layer preferably contains a cured product derived from an isocyanate curing agent (I'). That is, the anchor coating agent for forming the anchor coat layer preferably contains an isocyanate curing agent (I'). In the case of the anchor coating agent containing the isocyanate curing agent (I'), a cured product is formed by reacting with a urethane resin or the like, or by the isocyanate curing agent (I') itself reacting. The cured product is preferably derived from the reaction between the urethane resin and the isocyanate curing agent (I'), that is, preferably has a structure derived from the urethane resin and a structure derived from the isocyanate curing agent (I'). The isocyanate curing agent (I') may be the same as or different from the <Isocyanate curing agent (I)> described in [Adhesive layer].

Examples of the isocyanate curing agent (I') include aromatic isocyanate curing agents such as m-phenylene diisocyanate, p-phenylene diisocyanate, 4,4'-diphenylmethane diisocyanate, 2,4'-diphenylmethane diisocyanate, 2,2'-diphenylmethane diisocyanate, 3,3'-dimethyl-4,4'-biphenylene diisocyanate, 3,3'-dimethoxy-4,4'-biphenylene diisocyanate, 3,3'-dichloro-4,4'-biphenylene diisocyanate, 1,5-naphthalene diisocyanate, 1,5-tetrahydronaphthalene diisocyanate, xylylene diisocyanate, and tetramethylxylylene diisocyanate; aliphatic isocyanate curing agents such as tetramethylene diisocyanate, 1,6-hexamethylene diisocyanate, dodecamethylene diisocyanate, trimethylhexamethylene diisocyanate, 1,3-cyclohexylene diisocyanate, 1,4-cyclohexylene diisocyanate, hydrogenated xylylene diisocyanate, lysine diisocyanate, isophorone diisocyanate, 4,4'-dicyclohexylmethane diisocyanate, and 3,3'-dimethyl-4,4'-dicyclohexylmethane diisocyanate; alicyclic isocyanate curing agents such as cyclohexane-1,4-diisocyanate, hydrogenated xylylene diisocyanate, isophorone diisocyanate, dicyclohexylmethane-4,4'-diisocyanate, 1,3-bis(isocyanatemethyl)cyclohexane, methylcyclohexane diisocyanate, and norbornane diisocyanate; and adduct-type isocyanate curing agents which are adducts of the above isocyanate curing agents with polyhydric alcohols. Among these, aliphatic isocyanate curing agents are preferred, adduct-type aliphatic isocyanate curing agents are more preferred, and trifunctional adduct-type aliphatic isocyanate curing agents are even more preferred.

Examples of the polyhydric alcohol include 1,2-propylene glycol (divalent), diethylene glycol (divalent), dipropylene glycol (divalent), 1,3-butanediol (divalent), neopentyl glycol (divalent), trimethylolpropane (trivalent), 2,2,4-trimethyl-1,3-pentanediol (trivalent), polyethylene glycol (polyvalent), and polypropylene glycol (polyvalent), with trimethylolpropane being preferred among these. A trifunctional adduct-type aliphatic isocyanate may be obtained by the reaction of a trivalent alcohol with an aliphatic isocyanate curing agent. As the adduct-type aliphatic isocyanate curing agent, for example, a reaction product of 1,6-hexamethylene diisocyanate and trimethylolpropane is preferably raised.

As the isocyanate curing agent (I'), commercially available products can be used, and examples include 24A-100, 22A-75, TPA-100, TSA-100, TSS-100, TAE-100, TKA-100, P301-75E, E402-808, E405-70B, AE700-100, D101, D201, A201H (manufactured by Asahi Kasei Corporation), Mytex Y260A (manufactured by Mitsubishi Chemical Corporation), CORONATE HX, CORONATE HL, CORONATE L (manufactured by Nippon Polyurethane Industry Co., Ltd.), and Desmodur N75 MPA/X (manufactured by Bayer AG).

In the cured product composed of the urethane resin and the isocyanate curing agent (I') in the anchor coat layer, the mass ratio of the constituent unit derived from the urethane resin to the constituent unit derived from the isocyanate curing agent (I') is preferably 99:1 to 70:30, more preferably 98:2 to 80:20, and still more preferably 95:5 to 85:15. In the case of containing a co-resin in addition to the urethane resin, the mass ratio of the total amount of the urethane resin and the co-resin to the isocyanate curing agent (I') is preferably 99:1 to 70:30, more preferably 98:2 to 80:20, and still more preferably 95:5 to 85:15. In the case of the mass ratio of the resin to the isocyanate curing agent (I') being within the above range, the oxygen barrier property and laminate strength after bending become good.

<Additives>

The anchor coat layer preferably also contains known additives or structures derived from additives. Examples of the additives include pigment derivatives, dispersants, wetting agents, adhesion aids, leveling agents, antifoaming agents, antistatic agents, trapping agents, antiblocking agents, waxes, silane coupling agents, water, and the like.

<Anchor coating agent>

In the case of forming the anchor coat layer with an anchor coating agent, the anchor coating agent preferably contains a urethane resin. Furthermore, for improving the handling of the anchor coating agent and the oxygen barrier property after bending, optional components such as organic solvents, co-resins, inorganic pigments, additives, and the like may be added to the anchor coating agent individually or in combination of multiple components.
The anchor coating agent may be obtained, for example, by charging a resin solution in which a resin is dissolved in an organic solvent and an organic solvent into a stirrer equipped with stirring blades, rotating blades, and the like, followed by mixing and stirring. The stirring speed is not particularly limited, and may be performed at 50 to 2000 rpm.

<Organic solvent>

Examples of organic solvents that can be used in the anchor coating agent include non-aromatic organic solvents such as hydrocarbons like methylcyclohexane and ethylcyclohexane; ketones like acetone, methyl ethyl ketone (MEK), and methyl isobutyl ketone; esters like ethyl acetate, n-propyl acetate, and butyl acetate; and alcohols like methanol, ethanol, propanol, isopropanol (IPA), and butanol. The organic solvent may be appropriately selected in consideration of reducing the amount of solvent remaining in the film after printing, and may be used alone or in combination of two or more types. The content of the organic solvent is preferably 30 to 95 % by mass, more preferably 50 to 90 % by mass, and particularly preferably 70 to 85 % by mass in 100 % by mass of the anchor coating agent.
In one embodiment, the anchor coating agent preferably contains a glycol ether solvent to improve laminate strength. The glycol ether solvent is not particularly limited, but examples include ethylene glycol ethers and propylene glycol ethers. Among these, propylene glycol monomethyl ether, diethylene glycol monoethyl ether, and diethylene glycol monobutyl ether are preferred, with diethylene glycol monoethyl ether being more preferred. The glycol ether solvent is preferably 5 to 25 % by mass, and particularly preferably 5 to 15 % by mass in 100 % by mass of the organic solvent in the anchor coating agent.

<Formation of anchor coat layer>

The anchor coat layer may be formed, for example, by printing an anchor coating agent on the base material 1 and then removing volatile components. Examples of printing methods include conventionally known methods such as gravure printing, flexographic printing, dipping, roll coating, screen printing, and spraying, with gravure printing being preferred. For example, the anchor coating agent is diluted with a diluting solvent to a viscosity and concentration suitable for gravure printing, supplied to each printing unit either alone or in combination, and printed. Thereafter, the anchor coat layer may be obtained by fixing the coating through drying in an oven or the like.

[Printing layer]

The packaging material of the disclosure may have a printing layer. The printing layer preferably contains a resin and a colorant. The printing layer may be a layer that displays arbitrary patterns, designs, characters, symbols, and the like for the purpose of providing decoration or aesthetic appeal; displaying contents, expiration dates, and indications of manufacturers or sellers.
The printing layer may be a solid printing layer that does not have patterns, designs, characters, symbols, and the like. The method for forming the printing layer is not particularly limited, and it may be formed,, for example, using printing ink. The printing layer may have a single-layer structure or a multi-layer structure, and may be provided on the surface layer.

[Method for manufacturing packaging material]

The method for manufacturing a packaging material of the disclosure is a method for manufacturing a packaging material having a base material 1, a barrier layer, an adhesive layer, and a base material 2, including a step of applying a barrier coating agent to form a barrier layer, and a step of applying a reactive adhesive to form an adhesive layer, the barrier layer contains a hydrophilic resin, the adhesive layer is a layer including a reactive adhesive containing a polyol and an isocyanate curing agent (I), a permachor value of the polyol is 25 to 60, a mass per unit area of the adhesive layer is 1.0 to 4.5 g/m$^2$, and an olefin content of the packaging material is 80 % by mass or more in a total mass of the packaging material.

Examples

Hereinafter, the disclosure will be described in detail with reference to examples, but the disclosure is not limited to these examples. In this specification, "parts" and "%" represent parts by mass and % by mass, respectively, unless otherwise noted.

<Hydroxyl number>

The hydroxyl number is the number of mg of potassium hydroxide required to neutralize acetic acid bonded to hydroxyl groups in the case of acetylating 1 g of a sample, and was measured by the method described in JIS K 0070.

<Acid value>

The acid value is the number of mg of potassium hydroxide required to neutralize free fatty acids, resin acids, and the like contained in 1 g of a sample, and was measured by the method described in JIS K 0070.

<Amine value>

The amine value is the number of mg of potassium hydroxide equivalent to the amount of hydrochloric acid required to neutralize amino groups contained in 1 g of a sample, and was measured in accordance with JIS K 0070. A sample of 0.5 to 2 g was precisely weighed (sample solid content: Sg), and 50 mL of a mixed solution of methanol/methyl ethyl ketone = 60/40 (mass ratio) was added to the precisely weighed sample to dissolve it. Bromophenol blue was added as an indicator to the obtained solution, and the obtained solution was titrated with 0.2 mol/L ethanolic hydrochloric acid solution (titer: f). The point at which the color of the solution changed from green to yellow was taken as the end point, and the amine value was determined by the following (Formula 13) using the titration volume (A mL) at this time.

$$\text{(Formula 13)}$$

$$\text{Amine value} = (A \times f \times 0.2 \times 56.108)/S \text{ [mgKOH/g]}$$

<Mass average molecular weight>

The mass average molecular weight was determined as a converted molecular weight using polystyrene as a standard substance by measuring the molecular weight distribution using a gel permeation chromatography (GPC) apparatus (HLC-8220 manufactured by Tosoh Corporation). The measurement conditions are shown below.

Column: The following columns were used by connecting them in series.

TSKgel SuperAW2500 manufactured by Tosoh Corporation
TSKgel SuperAW3000 manufactured by Tosoh Corporation
TSKgel SuperAW4000 manufactured by Tosoh Corporation
TSKgel guardcolumnSuperAWH manufactured by Tosoh Corporation
Detector: RI (differential refractometer)
Measurement conditions: Column temperature 40°C
Eluent: tetrahydrofuran
Flow rate: 1.0 mL/min

<Glass transition temperature (Tg)>

The glass transition temperature was determined by differential scanning calorimetry (DSC). The measurement was performed using DSC8231 manufactured by Rigaku Corporation under conditions of a measurement temperature range of -70 to 250°C and a heating rate of 10°C/min. The midpoint (inflection point) of the baseline shift based on glass transition in the DSC curve was taken as the glass transition temperature.

<Measurement of mass per unit area in each layer>

<Anchor coat layer>

In the examples described below, regarding the intermediate laminate obtained during the production of the laminate, five pieces of 10 cm square were cut out from the base material 1/anchor coat layer configuration part, and five pieces of 10 cm square were cut out from the base material 1. The mass of each sample was measured, and the mass per unit area of the anchor coat layer was calculated using the following (Formula 14). As the base material 1, a uniaxially stretched polyethylene film (MDOPE) with a thickness of 20 μm was used.

Mass per unit area of anchor coat layer $(g/m^2)$ = (average mass per $1m^2$ of 5 samples of [base material 1/anchor coat layer]) - (average mass per $1m^2$ of 5 samples of base material 1) (Formula 14)

<Layers other than anchor coat layer>

For layers other than the anchor coat layer, the mass per unit area was calculated using the same method as for the anchor coat layer, except that the calculation formula and the sample cutting locations were different. As the base material 2, a low-density polyethylene film (LLDPE) with a thickness of 40 μm was used.

Mass per unit area of barrier layer $(g/m^2)$ = (average mass per $1m^2$ of 5 samples of [base material 1/anchor coat layer/barrier layer]) - (average mass per $1m^2$ of 5 samples of [base material 1/anchor coat layer]) (Formula 15)

Mass per unit area of adhesive layer $(g/m^2)$ = (average mass per $1m^2$ of 5 samples of [base material 1/anchor coat layer/barrier layer/adhesive layer/base material 2]) - {(average mass per $1m^2$ of 5 samples of [base material 1/anchor coat layer/barrier layer]) + (average mass per $1m^2$ of 5 samples of base material 2)} (Formula 16)

<Calculation of olefin content of package>

The olefin content in the packaging material may be calculated using the following Formula 17.

Olefin content of packaging material (%) = (mass of polyolefin resin contained per $1m^2$ of packaging material)/(mass per $1m^2$ of packaging material) $\times$ 100 (Formula 17)

As a calculation example, in the configuration of [base material 1/anchor coat layer/barrier layer/adhesive layer/base material 2], Mass of polyolefin resin contained per $1m^2$ of packaging material = (mass per $1m^2$ of base material 1) $\times$ (olefin content in base material 1) + (mass per $1m^2$ of anchor coat layer) $\times$ (olefin content in anchor coat layer) + (mass per $1m^2$ of barrier layer) $\times$ (olefin content in barrier layer) + (mass per $1m^2$ of adhesive layer) $\times$ (olefin content in adhesive layer) + (mass per $1m^2$ of base material 2) $\times$ (olefin content in base material 2)

Mass per $1m^2$ of packaging material = (mass per $1m^2$ of base material 1) + (mass per $1m^2$ of anchor coat layer) + (mass per $1m^2$ of barrier layer) + (mass per $1m^2$ of adhesive layer) + (mass per $1m^2$ of base material 2) and the olefin content in the packaging material may be obtained using Formula 17.
The mass per $1m^2$ of base material 1 and base material 2 may be directly measured by measuring the base material weight, or may be calculated using the base material film thickness and base material specific gravity as shown in Formula 18 below. For other layers, they may be obtained by the method described in <Measurement of mass per unit area in each layer> above.

Mass per $1m^2$ of base material $(g/m^2)$ = base material film thickness (μm) $\times$ base material specific gravity $(g/cm^3)$ (Formula 18)

(Synthesis of polyol)

<Synthesis Example 1> Polyol PO1

A reaction vessel equipped with a stirrer, thermometer, reflux cooling device, dropping tank, and nitrogen gas introduction tube was charged with 150 parts of ethylene glycol, 350 parts of diethylene glycol, 350 parts of isophthalic acid, and 150 parts of sebacic acid, and an esterification reaction was performed at 240°C. After distillation of a predetermined amount of water, the pressure was gradually reduced and a deglycol reaction was performed at 250°C for 5 hours at 1 mmHg or less to obtain a polyester polyol. This polyester polyol was diluted with ethyl acetate to a non-volatile content of 60% to obtain a polyol PO1 solution. The mass average molecular weight of polyol PO1 was 23,000, the number average molecular weight was 13,500, and the permachor value was 36.0.

<Synthesis Example 2> Polyol PO2

A reaction vessel equipped with a stirrer, thermometer, reflux cooling device, dropping tank, and nitrogen gas introduction tube was charged with 420 parts of neopentyl glycol, 373 parts of sebacic acid, and 187 parts of adipic acid, and an esterification reaction was performed at 240°C. After distillation of a predetermined amount of water, the pressure was gradually reduced and a deglycol reaction was performed at 250°C for 5 hours at 1 mmHg or less, then 10 parts of isophorone diisocyanate was added and reacted at 150°C for 2 hours, and further 10 parts of trimellitic anhydride was added and reacted at 180°C for 2 hours to obtain a polyester urethane polyol. This polyester urethane polyol was diluted with ethyl acetate to a non-volatile content of 60% to obtain a polyol PO2 solution. The mass average molecular weight of polyol PO2 was 25,000, the number average molecular weight was 11,400, and the permachor value was 25.9.

<Synthesis Example 3> Polyol PO3

Polyol PO3 was obtained by the same method as Synthesis Example 2, except that the raw materials and blending ratios described in Table 1 were used.

<Synthesis Examples 4 to 6, Comparative Synthesis Example 1> Polyols PO4 to 6, and 8

Polyols PO4 to 6, and 8 were obtained by the same method as Synthesis Example 1, except that the raw materials and blending ratios described in Table 1 were used.

<Synthesis Example 7> Polyol PO7

A reaction vessel equipped with a stirrer, thermometer, reflux cooling device, dropping tank, and nitrogen gas introduction tube was charged with 150 parts of bifunctional polypropylene glycol having a number average molecular weight of about 2,000, 700 parts of bifunctional polypropylene glycol having a number average molecular weight of about 400, 150 parts of trifunctional polypropylene glycol having a number average molecular weight of about 400, and 350 parts of tolylene diisocyanate, and heated at 80 to 90°C for 5 hours while stirring under a nitrogen gas stream to perform a urethanization reaction, thereby obtaining a polyether urethane polyol. To the obtained polyether urethane polyol, 0.1 parts of phosphoric acid and 0.2 parts of DYNASYLAN GLYMO (manufactured by EVONIK, 3-glycidoxypropyltrimethoxysilane) were added, and the mixture was adjusted to a solid content concentration of 60% with ethyl acetate to obtain a polyol PO7 solution. The mass average molecular weight of polyol PO7 was 36,000, the number average molecular weight was 10,000, and the permachor value was 38.8.

<Comparative Synthesis Example 2> Polyol PO9

398 parts of ethylene glycol was added to a reaction vessel equipped with a stirrer, nitrogen gas introduction tube, cooling condenser, and dropping funnel, and stirred while heating to 70°C. 602 parts of xylylene diisocyanate was slowly added dropwise thereto over 1 hour. After the dropwise addition, stirring was continued at 70°C for 3 hours to obtain a polyol having a molecular weight of 312 to which 2 moles of ethylene oxide was added. The mass average molecular weight of polyol PO9 was 500, the number average molecular weight was 312, and the permachor value was 79.6.

[Table 1]

| Table 1 | Synthesis Example 1 | Synthesis Example 2 | Synthesis Example 3 | Synthesis Example 4 | Synthesis Example 5 | Synthesis Example 6 | Synthesis Example 7 | Comparative Synthesis Example 1 | Comparative Synthesis Example 2 |
|---|---|---|---|---|---|---|---|---|---|
| | PO1 | PO2 | PO3 | PO4 | PO5 | PO6 | PO7 | PO8 | PO9 |
| Isophthalic Acid | 350 | | 280 | | | | | | |
| Phthalic Anhydride | | | | 40 | 657 | 469 | | | |
| Sebacic Acid | 150 | 373 | 280 | | | | | 522 | |
| Adipic Acid | | 187 | | | | | | | |
| Succinic Acid | | | | 610 | | | | | |
| 1,6-Hexanediol | | | 210 | | | | | | |
| Neopentyl Glycol | | 420 | 210 | | | | | 459 | |
| Diethylene Glycol | 350 | | | | | | | | |
| Ethylene Glycol | 150 | | | 350 | 343 | 358 | | | 398 |
| Isophorone Diisocyanate | | 10 | 10 | | | | | 10 | |
| Tolylene diisocyanate | | | | | | 172 | | | 602 |
| Trimesic Acid | | 10 | 10 | | | | | 10 | |
| Bifunctional Polypropylene Glycol (Number Average Molecular Weight 2000) | | | | | | | 150 | | |
| Bifunctional Polypropylene Glycol (Number Average Molecular Weight 400) | | | | | | | 700 | | |
| Trifunctional Polypropylene Glycol (Number Average Molecular Weight 400) | | | | | | | 150 | | |
| Tolylene Diisocyanate | | | | | | | 350 | | |
| Phosphoric Acid | | | | | | | 0.1 | | |
| DYNASYLAN GLYMO | | | | | | | 0.2 | | |
| Permachor Value of Polyol Resin | 36.0 | 25.9 | 30.1 | 41.7 | 51.5 | 59.6 | 38.8 | 23.0 | 79.8 |

EP 4 721 976 A1

22

(continued)

| Table 1 | Synthesis Example 1 | Synthesis Example 2 | Synthesis Example 3 | Synthesis Example 4 | Synthesis Example 5 | Synthesis Example 6 | Synthesis Example 7 | Comparative Synthesis Example 1 | Comparative Synthesis Example 2 |
|---|---|---|---|---|---|---|---|---|---|
| | PO1 | PO2 | PO3 | PO4 | PO5 | PO6 | PO7 | PO8 | PO9 |
| Weight Average Molecular Weight of Polyol | 23000 | 25000 | 25000 | 2500 | 3300 | 1200 | 36000 | 25000 | 500 |
| Number Average Molecular Weight of Polyol | 13500 | 11400 | 11400 | 11400 | 1100 | 875 | 10000 | 11400 | 312 |

(Isocyanate curing agent)

Isocyanate curing agent 11: Takenate D-103H (manufactured by Mitsui Chemicals, solid content: 75%, adduct of tolylene diisocyanate and trimethylolpropane, solvent: ethyl acetate) Isocyanate curing agent I2: Duranate 22A-75PX (manufactured by Asahi Kasei, biuret of hexamethylene diisocyanate, solid content 75%, solvent: ethyl acetate)

<Preparation Example 1> Isocyanate Curing Agent I3

38 parts of Takenate D-103H and 62 parts of Duranate 22A-75PX were mixed with stirring to obtain isocyanate curing agent I3.

<Preparation Example 2> Isocyanate Curing Agent I4

38 parts of Takenate D-103H, 29 parts of Duranate 22A-75PX, and 33 parts of Takenate D-110NB (manufactured by Mitsui Chemicals, solid content 75%, adduct of xylene diisocyanate and trimethylolpropane, solvent: ethyl acetate) were mixed with stirring to obtain isocyanate curing agent I4.

<Synthesis Example 8> Isocyanate Curing Agent I5

23 parts of bifunctional polypropylene glycol having a number average molecular weight of about 2,000, 18 parts of bifunctional polypropylene glycol having a number average molecular weight of about 400, 2 parts of trifunctional polypropylene glycol having a number average molecular weight of about 400, and 30 parts of 4,4'-diphenylmethane diisocyanate were charged into a reaction vessel, and a urethanization reaction was performed by heating at 70 to 80°C for 7 hours while stirring under a nitrogen gas stream. After completion of the reaction, 7 parts of a trimethylolpropane adduct of tolylene diisocyanate was mixed. The mixture was diluted with ethyl acetate to a solid content concentration of 75% to obtain a polyisocyanate solution containing polyether urethane polyisocyanate. 80 parts of the polyisocyanate solution and 20 parts of Desmodur L75 (manufactured by Sumika Covestro Urethane Co., Ltd., trimethylolpropane adduct of tolylene diisocyanate, NCO group content 13%, solid content concentration 75%) were mixed to obtain isocyanate curing agent I5 solution.

<Preparation Example 3> Isocyanate Curing Agent I6

38 parts of Takenate D-103H and 62 parts of Takenate D-110NB were mixed with stirring to obtain isocyanate curing agent I6.

(Synthesis of Urethane Resin)

<Synthesis Example 9> Urethane Resin PU1

120.6 parts of ethyl acetate, 153.7 parts of polyester polyol having a number average molecular weight of 2,000 which is a condensate of 3-methyl-1,5-pentanediol (MPD) and adipic acid (AdA) (hereinafter "MPD/AdA 2000"), 27.9 parts of polyester polyol having a number average molecular weight of 5,000 which is a condensate of 3-methyl-1,5-pentanediol (MPD) and adipic acid (AdA) (hereinafter "MPD/AdA 5000"), 12.4 parts of polypropylene glycol having a number average molecular weight of 700 (hereinafter "PPG 700"), 35.0 parts of polypropylene glycol having a number average molecular weight of 2000 (hereinafter "PPG 2000"), and 52.3 parts of isophorone diisocyanate (hereinafter "IPDI") were mixed and reacted at 90°C for 5 hours under a nitrogen atmosphere to obtain an isocyanate-terminated urethane prepolymer. Next, 279.6 parts of isopropanol, 299.7 parts of ethyl acetate, 2.1 parts of iminobispropylamine (hereinafter "IBPA"), and 16.6 parts of isophorone diamine (hereinafter "IPDA") were mixed with stirring, and the obtained isocyanate-terminated urethane prepolymer was gradually added at 40°C. The mixture was reacted at 80°C for 1 hour to obtain a solution of urethane resin PU1 having a solid content of 30 % by mass, a urea bond concentration of 0.78 mmol/g, an amine value of 1.3 mgKOH/g, and a mass average molecular weight of 36,100.

<Synthesis Examples 10 and 11> Urethane Resins PU2 and 3

Urethane resins PU2 and PU3 were obtained by the same method as Synthesis Example 1, except that the raw materials and blending ratios described in Table 2 were used.

[Table 2]

| Table 2 | Synthesis Example 9 | Synthesis Example 10 | Synthesis Example 11 |
|---|---|---|---|
| Raw Materials | PU1 | PU2 | PU3 |
| Ethyl Acetate | 120.6 | 120.6 | 120.6 |
| MPD/AdA 2000 (Molecular Weight 2000) | 153.7 | 178.8 | 126.6 |
| MPD/AdA 5000 (Molecular Weight 5000) | 27.9 | 32.5 | 23.0 |
| PPG 700 (Molecular Weight 700) | 12.4 | 14.5 | 10.2 |
| PPG 2000 (Molecular Weight 2000) | 35.0 | 40.7 | 28.8 |
| IPDI (Molecular Weight 222.29) | 52.3 | 31.8 | 72.2 |
| Isopropanol | 279.6 | 279.6 | 279.6 |
| Ethyl Acetate | 299.7 | 299.7 | 299.7 |
| IBPA (Molecular Weight 131.22) | 2.1 | | 2.0 |
| IPDA (Molecular Weight 170.30) | 16.6 | 1.7 | 37.1 |
| Urea Bond Concentration (mmol/g) | 0.78 | 0.04 | 1.52 |
| Solid content mass (%) | 30.0% | 30.0% | 30.0% |
| Amine Value (mgKOH/g) | 1.3 | 6.5 | 8.0 |
| Molecular Weight | 36100 | 40,000 | 32,000 |
| OH (mol/g) | 0.24 | 0.27 | 0.19 |
| NCO (mol/g) | 0.47 | 0.29 | 0.65 |
| NCO/OH | 2.00 | 1.05 | 3.35 |

(Production of anchor coating agent)

<Production Example 1> Anchor Coating Agent AC1

47 parts of urethane resin PU1 solution, 15 parts of vinyl chloride-vinyl acetate resin PVC1 solution (hydroxyl number: 154 mgKOH/g, mass average molecular weight: 28,000, glass transition temperature: 78°C, solid content mass% = 25%), 1 part of silica particles S1 (manufactured by Mizusawa Industrial Chemicals, Ltd., Mizukasil P-707, average particle diameter (laser scattering method): 4 $\mu$m, oil absorption: 250 ml/100g, solid content mass% = 100%), 1 part of chlorinated polypropylene (manufactured by Nippon Paper Industries Co., Ltd., Super Chlon 390S, solid content mass% = 50%), 0.5 parts of fatty acid amide solution (lauric acid amide, solid content mass% = 50%), 30.5 parts of mixed solvent (normal propyl acetate (NPAC)/isopropyl alcohol (IPA) = 7/3), 3 parts of propylene glycol monomethyl ether, and 2 parts of water were mixed and dispersed in a bead mill for 20 minutes to obtain a pigment dispersion. 20 parts of water was mixed with stirring into the obtained pigment dispersion to obtain anchor coating agent AC1.

<Production Examples 2 to 4> Anchor Coating Agents AC2 to 4

Anchor coating agents AC2 to 4 were obtained by the same method as Production Example 1, except that the raw materials and blending ratios were changed to those described in Table 3.

[Table 3]

| Table 3 | Urea bond concentration (mmol/g) | N. V. (%) | Production Example 1 | Production Example 2 | Production Example 3 | Production Example 4 |
|---|---|---|---|---|---|---|
| | | | AC1 | AC2 | AC3 | AC4 |
| Urethane Resin PU1 Solution | 0.78 | 30 | 47 | | | |

(continued)

| Table 3 | Urea bond concentration (mmol/g) | N. V. (%) | Production Example 1 | Production Example 2 | Production Example 3 | Production Example 4 |
|---|---|---|---|---|---|---|
| | | | AC1 | AC2 | AC3 | AC4 |
| Urethane Resin PU2 Solution | 0.04 | 30 | | 47 | | |
| Urethane Resin PU3 Solution | 1.52 | 30 | | | 47 | |
| Vinyl Chloride-Vinyl Acetate Resin PVC1 Solution | - | 25 | 15 | 15 | 15 | 62 |
| Silica Particles S1 | | 100 | 1 | 1 | 1 | 1 |
| Chlorinated Polyolefin | | 50 | 1 | 1 | 1 | 1 |
| Lauric Acid Amide | | 50 | 0.5 | 0.5 | 0.5 | 0.5 |
| Water | | | 2 | 2 | 2 | 2 |
| n-Propyl Acetate/IPA Mixture (7:3) | | | 30.5 | 30.5 | 30.5 | 30.5 |
| Propylene Glycol Monomethyl Ether | | | 3 | 3 | 3 | 3 |
| Total | | | 100 | 100 | 100 | 100 |

(Production of barrier coating agent)

<Production Example 5> Barrier Coating Agent V1

6 parts of polyvinyl alcohol resin PVA1 (manufactured by Kuraray Co., Ltd., Exceval AQ-4104, ethylene vinyl alcohol resin, ethylene content: 6 mol%, solid content mass% = 100%) and 92 parts of mixed solvent (water/IPA = 8/2) were heated with stirring, and heating and stirring were continued at 95°C for 1 hour. Then, heating was stopped and stirring was continued until the mixture returned to room temperature to obtain a polyvinyl alcohol resin PVA1 aqueous solution. 2 parts of montmorillonite (swellable, average particle diameter: 2 $\mu$m, aspect ratio: 500, specific surface area: 13.1 m$^2$/g, particle thickness: 1 nm, average major diameter: 500 nm, solid content mass% = 100%) was added to the polyvinyl alcohol resin PVA1 aqueous solution and mixed with stirring to obtain barrier coating agent V1.

<Production Examples 6 to 13, Comparative Production Example 1> Barrier Coating Agents V2 to V10

Barrier coating agents V2 to 10 were obtained by the same method as Production Example 5, except that the raw materials and blending ratios were changed to those described in Table 4. The properties of the raw materials used are as follows.

- Polyvinyl alcohol resin PVA2: manufactured by Kuraray Co., Ltd., Kuraray Poval 28-98, polyvinyl alcohol, solid content mass% = 100%
- Polyvinyl alcohol resin PVA3: manufactured by Sekisui Chemical Co., Ltd., ULTILOC 5003, amine-modified polyvinyl alcohol, solid content mass% = 100%
- Acrylic resin A1: manufactured by Nippon Shokubai Co., Ltd., Aqualic HL415, mass average molecular weight 10,000, solid content mass% = 45%
- Bentonite: manufactured by BYK, CLOISITE-Na+
- Mica: average particle diameter: 6 $\mu$m, aspect ratio 100, specific surface area 9 m$^2$/g, solid content mass% = 100%
- Kaolin: average particle diameter 1.2 $\mu$m, aspect ratio 100, specific surface area 10 m$^2$/g, solid content mass% = 100%

[Table 4]

| Table 4 | | N.V. (%) | Production Example 5 / V1 | Production Example 6 / V2 | Production Example 7 / V3 | Production Example 8 / V4 | Production Example 9 / V5 | Production Example 10 / V6 | Production Example 11 / V7 | Production Example 12 / V8 | Production Example 13 / V9 | Comparative Production Example 1 / V10 |
|---|---|---|---|---|---|---|---|---|---|---|---|---|
| Hydrophilic resins | Polyvinyl alcohol resin (PVA1) | 100 | 6 | 6 | 6 | 6 | 6 | 6 | | | | |
| | Polyvinyl alcohol resin (PVA2) | 100 | | | | | | | 6 | | | |
| | Polyvinyl alcohol resin (P VA3) | 100 | | | | | | | | 6 | | |
| Resins other than hydrophilic resins | Acrylic resin (A1) | 45 | | | | | | | | | 13.3 | |
| | Urethane resin (PU1) | 30 | | | | | | | | | | 20 |
| Water-based media | Mixed Solution (Water/IPA=8/2) | | 92 | 94 | 92 | 92 | 92 | 92 | 92 | 92 | 84.7 | |
| Organic media | Mixed Solution (n-Propyl acetate/IPA=8/2) | | | | | | | | | | | 78 |
| Inorganic filler | Montmorillonite | 100 | 2 | | | | | | 2 | 2 | 2 | 2 |
| | Bentonite | 100 | | | 2 | | | | | | | |
| | Mica | 100 | | | | 2 | | | | | | |
| | Kaolin | 100 | | | | | 2 | | | | | |
| | Silica Particles S1 | 100 | | | | | | 2 | | | | |
| Total (%) | | | 100 | 100 | 100 | 100 | 100 | 100 | 100 | 100 | 100 | 100 |
| Solid content mass (%) | | | 8 | 6 | 8 | 8 | 8 | 8 | 8 | 8 | 8 | 8 |
| Inorganic filler content in Solid content mass (%) | | | 2 | 0 | 2 | 2 | 2 | 2 | 2 | 2 | 2 | 2 |

(Production of Packaging Material)

<Example 1> Packaging material P1

100 parts of anchor coating agent AC1 was diluted with a mixed solvent (isopropanol/ethyl acetate) to achieve Zahn cup #3 (manufactured by Rigo Co., Ltd.) 15 seconds (25°C), then 3 parts of isocyanate curing agent H1 (manufactured by Asahi Kasei Corporation, Duranate P-301-75E, hexamethylene diisocyanate-based (aliphatic), adduct type, solid content 50%) was added and mixed with stirring. Further, 100 parts of barrier coating agent V1 was diluted with a mixed solvent (isopropanol/water) to achieve Zahn cup #3 (manufactured by Rigo Co., Ltd.) 16 seconds (25°C). Thereafter, on a uniaxially stretched polyethylene film (MDOPE) surface having a thickness of 20 $\mu$m and specific gravity of 0.92 g/cm$^3$, using a gravure printing machine equipped with a gravure plate having a plate depth of 15 $\mu$m, under conditions of printing speed 50 m/min and inline oven 60°C, the diluted anchor coating agent AC1 with curing agent H1 added was printed to form an anchor coat layer, and on the anchor coat layer, using a gravure printing machine equipped with a gravure plate having a plate depth of 30 $\mu$m with a non-image area on one half side of the plate, under conditions of printing speed 50 m/min and inline oven 60°C, the diluted barrier coating agent V1 was printed twice to form a barrier layer, thereby obtaining intermediate laminate p1 having a configuration of MDOPE (base material 1)/anchor coat layer/barrier layer. Next, polyol PO1 was mixed with ethyl acetate, then isocyanate curing agent I1 was added and mixed again to obtain an adhesive solution. The solid content ratio of polyol PO1 and isocyanate curing agent I1 at this time was 95/5, and the solid content of the adhesive solution was 23%. Thereafter, using a dry laminating machine equipped with a gravure plate having a plate depth of 60 $\mu$m, the adhesive solution was coated on the barrier layer of the intermediate laminate p1, the solvent was dried in an oven to form an adhesive layer, then on the adhesive layer, at a line speed of 40 m/min, a low-density polyethylene film (LLDPE) having a thickness of 40 $\mu$m and specific gravity of 0.91 g/cm$^3$ was laminated, and kept warm at 40°C for 1 day to obtain a packaging material P1 having a configuration of MDOPE (base material 1)/anchor coat layer/barrier layer/adhesive layer/LLDPE (base material 2). The mass per unit area of the anchor coat layer of the packaging material P1 was 0.4 g/m$^2$, the mass per unit area of the barrier layer was 1.0 g/m$^2$, and the mass per unit area of the adhesive layer was 3.0 g/m$^2$.
<Examples 2 to 22, Comparative Examples 1 to 7> Packaging materials P2 to 29 Packaging materials P2 to 29 were obtained by the same method as Example 1, except that the raw materials and coating conditions described in Tables 5 and 6 were changed. The materials used are as follows.

- Nylon film (NY) with a thickness of 15 $\mu$m and specific gravity of 1.15 g/cm$^3$

<Example 23>

The packaging material P30 was produced by the same method as Example 1, except that no anchor coat layer was formed on the base material 1. The evaluation of each item described later was as follows: laminate strength: 3, residual solvent: 4, oxygen barrier property after bending: 3.

(Evaluation)

The following evaluations were performed using the packaging materials obtained in the above examples and comparative examples. The results are shown in Tables 5 and 6.

<Laminate Strength>

The laminates obtained in the above examples and comparative examples were each cut into rectangles with a length of 150 mm and a width of 15 mm, and the base material 1 and the base material 2 were peeled apart at one end. Next, the base material 1 and the base material 2 were each set in the chucks of a tensile testing machine, the laminate strength in the 90° direction was measured, and evaluation was performed according to the following criteria. It is noted that 3 to 5 is a range with no practical problems.

⟨⟨Evaluation Criteria⟩⟩

5: 1.5 N/15 mm or more
4: 1.2 N/15 mm or more and less than 1.5 N/15 mm
3: 1.0 N/15 mm or more and less than 1.2 N/15 mm

2: 0.8 N/15 mm or more and less than 1.0 N/15 mm
1: less than 0.8 N/15 mm

<Residual Solvent>

Ten pieces of the obtained packaging material were cut out into 50 mm × 10 mm rectangles, placed in headspace vial bottles (manufactured by Agilent, 75.5 mm × 23 mm), heated at 80°C for 30 minutes in a sealed state, then a fixed amount of solvent vapor was extracted with a microsyringe, and the volatile solvent amount was confirmed by gas chromatography (manufactured by GL Sciences, GC-4000) and evaluated according to the following criteria. It is noted that 3 to 5 is a range with no practical problems.

⟨⟨Evaluation Criteria⟩⟩

5: less than 2.0 mg/m$^2$
4: 2.0 mg/m$^2$ or more and less than 3.0 mg/m$^2$
3: 3.0 mg/m$^2$ or more and less than 4.0 mg/m$^2$
2: 4.0 mg/m$^2$ or more and less than 5.0 mg/m$^2$
1: 5.0 mg/m$^2$ or more

<Oxygen barrier property after bending>

The obtained packaging material was cut into 100 mm squares, folded so that the surfaces of the base material 2 overlapped each other, and a load of 1 kg/m$^2$ for 5 seconds was applied to the folded portion. The oxygen transmission rate (OTR) of the sample that was unfolded after bending was measured using an oxygen transmission rate measuring device OC-TRAN manufactured by MOCON under conditions of temperature 30°C and relative humidity 70% in accordance with JIS K 7162 Method B (isobaric method), and evaluated according to the following criteria.
It is noted that 3 to 5 is a range with no practical problems.

⟨⟨Evaluation Criteria⟩⟩

5: The oxygen transmission rate is less than 100 cc/m$^2$/day/atm.
4: The oxygen transmission rate is 100 cc/m$^2$/day/atm or more and less than 1000 cc/m$^2$/day/atm.
3: The oxygen transmission rate is 1000 cc/m$^2$/day/atm or more and less than 1500 cc/m$^2$/day/atm.
2: The oxygen transmission rate is 1500 cc/m$^2$/day/atm or more and less than 2000 cc/m$^2$/day/atm.
1: The oxygen transmission rate is 2000 cc/m$^2$/day/atm or more.

[Table 5]

| Table 5-1 | | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|---|
| | | | P1 | P2 | P3 | P4 | P5 | P6 | P7 | P8 | P9 | P10 | P11 |
| Base material 1 | | Base material type | MDOPE | MDOPE | MDOPE | MDOPE | MDOPE | MDOPE | MDOPE | MDOPE | MDOPE | MDOPE | MDOPE |
| Anchor coat layer | | Anchor coating agent type | AC1 | AC1 | AC1 | AC1 | AC1 | AC1 | AC1 | AC1 | AC1 | AC1 | AC1 |
| | | Urea bond concentration of Urethane Resin (mmol/g) | 0.78 | 0.78 | 0.78 | 0.78 | 0.78 | 0.78 | 0.78 | 0.78 | 0.78 | 0.78 | 0.78 |
| | | Curing agent type | H1 | H1 | H1 | H1 | H1 | H1 | H1 | H1 | H1 | H1 | H1 |
| | | Mass per unit area (g/m$^2$) | 0.4 | 0.4 | 0.4 | 0.4 | 0.4 | 0.4 | 0.4 | 0.4 | 0.4 | 0.4 | 0.4 |
| Barrier layer | | Barrier Coating Agent Type | V1 | V2 | V3 | V4 | V5 | V6 | V7 | V8 | V9 | V1 | V1 |
| | | Plate Depth (μm) | 30 | 30 | 30 | 30 | 30 | 30 | 30 | 30 | 30 | 30 | 60 |
| | | Number of Printing Layers | 2 | 3 | 2 | 2 | 2 | 2 | 2 | 2 | 2 | 1 | 7 |
| | | Mass per unit area (g/m$^2$) | 1 | 1 | 1 | 1 | 1 | 1 | 1 | 1 | 1 | 0.5 | 7 |
| Adhesive layer | | Polyol Resin Type | PO1 | PO1 | PO1 | PO1 | PO1 | PO1 | PO1 | PO1 | PO1 | PO1 | PO1 |
| | | Permachor Value of Polyol Resin | 36.0 | 36.0 | 36.0 | 36.0 | 36.0 | 36.0 | 36.0 | 36.0 | 36.0 | 36.0 | 36.0 |
| | | Curing Agent Type | I1 | I1 | I1 | I1 | I1 | I1 | I1 | I1 | I1 | I1 | I1 |
| | | Solid content ratio of Polyol to Isocyanate Curing Agent | 95:5 | 95:5 | 95:5 | 95:5 | 95:5 | 95:5 | 95:5 | 95:5 | 95:5 | 95:5 | 95:5 |
| | | Plate Depth (μm) | 60 | 60 | 60 | 60 | 60 | 60 | 60 | 60 | 60 | 60 | 60 |
| | | Solid content of Diluted Adhesive (%) | 23 | 23 | 23 | 23 | 23 | 23 | 23 | 23 | 23 | 23 | 23 |
| | | Mass per unit area (g/m$^2$) | 3 | 3 | 3 | 3 | 3 | 3 | 3 | 3 | 3 | 3 | 3 |
| | | Permachor Value of Cured Product of Polyol and Isocyanate Curing Agent | 45.5 | 45.5 | 45.5 | 45.5 | 45.5 | 45.5 | 45.5 | 45.5 | 45.5 | 45.5 | 45.5 |
| Base material 2 | | Base material type | LLDPE | LLDPE | LLDPE | LLDPE | LLDPE | LLDPE | LLDPE | LLDPE | LLDPE | LLDPE | LLDPE |

(continued)

| Table 5-1 | | Example 1 | Example 2 | Example 3 | Example 4 | Example 5 | Example 6 | Example 7 | Example 8 | Example 9 | Example 10 | Example 11 |
|---|---|---|---|---|---|---|---|---|---|---|---|---|
| | | P1 | P2 | P3 | P4 | P5 | P6 | P7 | P8 | P9 | P10 | P11 |
| Olefin content of packaging material (% by mass) | | 92.6 | 92.6 | 92.6 | 92.6 | 92.6 | 92.6 | 92.6 | 92.6 | 92.6 | 93.4 | 84.0 |
| Mass per unit area ratio (barrier layer:adhesive layer) | | 25:75 | 25:75 | 25:75 | 25:75 | 25:75 | 25:75 | 25:75 | 25:75 | 25:75 | 14:86 | 70:30 |
| Evaluation | Laminate strength | 5 | 5 | 5 | 5 | 5 | 4 | 5 | 5 | 3 | 5 | 4 |
| | Residual solvent | 5 | 4 | 5 | 5 | 5 | 5 | 5 | 5 | 3 | 4 | 5 |
| | Oxygen barrier properties after bending | 5 | 3 | 5 | 4 | 4 | 4 | 5 | 5 | 3 | 3 | 5 |

[Table 5]

| Table 5-2 | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| | | P12 | P13 | P14 | P15 | P16 | P17 | P18 | P19 | P20 | P21 | P22 |
| Base material 1 | Base material type | MDOPE | MDOPE | MDOPE | MDOPE | MDOPE | MDOPE | MDOPE | MDOPE | MDOPE | MDOPE | MDOPE |
| Anchor coat layer | Anchor coating agent type | AC1 | AC1 | AC1 | AC1 | AC1 | AC1 | AC1 | AC1 | AC2 | AC3 | AC4 |
| | Urea bond concentration of Urethane Resin (mmol/g) | 0.78 | 0.78 | 0.78 | 0.78 | 0.78 | 0.78 | 0.78 | 0.78 | 0.04 | 1.52 | - |
| | Curing agent type | H1 | H1 | H1 | H1 | H1 | H1 | H1 | H1 | H1 | H1 | H1 |
| | Mass per unit area (g/m$^2$) | 0.4 | 0.4 | 0.4 | 0.4 | 0.4 | 0.4 | 0.4 | 0.4 | 0.4 | 0.4 | 0.4 |
| Barrier layer | Barrier Coating Agent Type | V1 | V1 | V1 | V1 | V1 | V1 | V1 | V1 | V1 | V1 | V1 |
| | Plate Depth ($\mu$m) | 30 | 30 | 30 | 30 | 30 | 30 | 30 | 30 | 30 | 30 | 30 |
| | Number of Printing Layers | 2 | 2 | 2 | 2 | 2 | 2 | 2 | 2 | 2 | 2 | 2 |
| | Mass per unit area (g/m$^2$) | 1 | 1 | 1 | 1 | 1 | 1 | 1 | 1 | 1 | 1 | 1 |
| Adhesive layer | Polyol Resin Type | PO2 | PO3 | PO4 | PO5 | PO6 | PO7 | PO1 | PO1 | PO1 | PO1 | PO1 |
| | Permachor Value of Polyol Resin | 25.9 | 30.1 | 41.7 | 51.5 | 59.6 | 38.8 | 36.0 | 36.0 | 36.0 | 36.0 | 36.0 |
| | Isocyanate Curing Agent Type | I2 | I2 | I3 | I3 | I4 | I5 | I1 | I1 | I1 | I1 | I1 |
| | Solid content ratio of Polyol to Isocyanate compound | 94:6 | 94:6 | 42:58 | 32:68 | 24:76 | 94:6 | 95:5 | 95:5 | 95:5 | 95:5 | 95:5 |
| | Plate Depth ($\mu$m) | 60 | 60 | 60 | 60 | 60 | 40 | 30 | 60 | 60 | 60 | 60 |
| | Solid content of Diluted Adhesive (%) | 23 | 23 | 23 | 23 | 23 | 30 | 30 | 30 | 23 | 23 | 23 |
| | Mass per unit area (g/m$^2$) | 3 | 3 | 3 | 3 | 3 | 3 | 2 | 4 | 3 | 3 | 3 |
| | Permachor Value of Cured Product of Polyol and Isocyanate compound | 35.7 | 40.1 | 50.4 | 59.5 | 68.9 | 55.8 | 55.8 | 55.8 | 45.5 | 45.5 | 45.5 |
| Base material 2 | Base material type | LLDPE | LLDPE | LLDPE | LLDPE | LLDPE | LLDPE | LLDPE | LLDPE | LLDPE | LLDPE | LLDPE |

Table 5-2 (continued)

| | | Example 12 | Example 13 | Example 14 | Example 15 | Example 16 | Example 17 | Example 18 | Example 19 | Example 20 | Example 21 | Example 22 |
|---|---|---|---|---|---|---|---|---|---|---|---|---|
| | | P12 | P13 | P14 | P15 | P16 | P17 | P18 | P19 | P20 | P21 | P22 |
| Olefin content of packaging material (% by mass) | | 92.6 | 92.6 | 92.6 | 92.6 | 92.6 | 92.6 | 94.2 | 91.0 | 92.6 | 92.6 | 92.6 |
| Mass per unit area ratio (barrier layer:adhesive layer) | | 25:75 | 25:75 | 25:75 | 25:75 | 25:75 | 25:75 | 25:75 | 25:75 | 25:75 | 25:75 | 25:75 |
| Evaluation | Laminate strength | 5 | 5 | 4 | 4 | 3 | 5 | 5 | 5 | 4 | 4 | 3 |
| | Residual solvent | 5 | 5 | 5 | 4 | 3 | 5 | 5 | 5 | 5 | 4 | 3 |
| | Oxygen barrier properties after bending | 4 | 5 | 5 | 5 | 5 | 4 | 5 | 5 | 3 | 3 | 3 |

[Table 6]

| Table 6 | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|
| | | P23 | P24 | P25 | P26 | P27 | P28 | P29 |
| Base material 1 | Base material type | MDOPE | MDOPE | MDOPE | MDOPE | MDOPE | MDOPE | NY |
| Anchor coat layer | Anchor coating agent type | AC1 | AC1 | AC1 | AC1 | AC1 | AC1 | AC1 |
| | Urea bond concentration of Urethane Resin (mmol/g) | 0.78 | 0.78 | 0.78 | 0.78 | 0.78 | 0.78 | 0.78 |
| | Curing agent type | H1 | H1 | H1 | H1 | H1 | H1 | H1 |
| | Mass per unit area (g/m$^2$) | 0.4 | 0.4 | 0.4 | 0.4 | 0.4 | 0.4 | 0.4 |
| Barrier layer | Barrier Coating Agent Type | - | V10 | V1 | V1 | V1 | V10 | V10 |
| | Plate Depth ($\mu$m) | - | 30 | 30 | 30 | 30 | 30 | 30 |
| | Number of Printing Layers | - | 2 | 2 | 2 | 2 | 2 | 2 |
| | Mass per unit area (g/m$^2$) | - | I | I | I | I | I | 1 |
| Adhesive layer | Polyol Resin Type | PO1 | PO1 | PO8 | PO9 | PO1 | PO1 | PO1 |
| | Permachor Value of Polyol Resin | 36.0 | 36.0 | 23.3 | 79.8 | 36.0 | 36.0 | 36.0 |
| | Curing Agent Type | I1 | I1 | 12 | I6 | I1 | I1 | I1 |
| | Solid content ratio of Polyol to Isocyanate Curing Agent | 95:5 | 95:5 | 94:6 | 15:85 | 95:5 | 95:5 | 95:5 |
| | Plate Depth ($\mu$m) | 60 | 60 | 60 | 60 | 15 | 60 | 60 |
| | Solid content of Diluted Adhesive (%) | 24 | 24 | 24 | 24 | 28 | 36 | 24 |
| | Mass per unit area (g/m$^2$) | 3 | 3 | 3 | 3 | 0.8 | 5 | 3 |
| | Permachor Value of Cured Product of Polyol and Isocyanate Curing Agent | 45.5 | 45.5 | 33.5 | 92.6 | 45.5 | 33.5 | 92.6 |
| Base material 2 | Base material type | LLDPE | LLDPE | LLDPE | LLDPE | LLDPE | LLDPE | LLDPE |
| Olefin content of packaging material (% by mass) | | 94.2 | 92.6 | 92.6 | 92.6 | 96.1 | 89.5 | 62.7 |
| Mass per unit area ratio (barrier layer:adhesive layer) | | - | 25:75 | 25:75 | 25:75 | 56:44 | 17:83 | 25:75 |

34

(continued)

| Table 6 | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|
| | | | P23 | P24 | P25 | P26 | P27 | P28 | P29 |
| Evaluation | | Laminate strength | 5 | 5 | 5 | 2 | 2 | 5 | 5 |
| | | Residual solvent | 1 | 1 | 5 | 2 | 5 | 1 | 1 |
| | | Oxygen barrier properties after bending | 1 | 2 | 1 | 5 | 2 | 5 | 5 |

From the above results, Comparative Example 1 did not have a barrier layer, so the residual solvent evaluation and oxygen barrier property after bending were poor. Comparative Example 2 did not contain a hydrophilic resin in the barrier layer, so the residual solvent evaluation and oxygen barrier property after bending were poor. In Comparative Example 3, the permachor value of the polyol was less than 25, so the oxygen barrier property after bending was poor. In Comparative Example 4, the permachor value of the polyol was more than 60, so the laminate strength and residual solvent evaluation were poor. In Comparative Example 5, the mass per unit area of the adhesive was less than 1.0 g/m$^2$, so the laminate strength and oxygen barrier property after bending were poor. In Comparative Example 6, it was more than 4.5 g/m$^2$, so the residual solvent evaluation was poor. In Comparative Example 7, the olefin content in the packaging material was less than 80 % by mass in the total mass of the packaging material, so the residual solvent evaluation was poor. On the other hand, the packaging materials of the examples had a barrier layer containing a hydrophilic resin, the adhesive layer had a structure derived from a polyol with a permachor value of 25 to 60, the mass per unit area of the adhesive layer was 1.0 to 4.5 g/m$^2$, and the olefin content of the packaging material was 80 % by mass or more in the total mass of the packaging material. Thus, it was shown that the disclosure may provide a packaging material that excels in laminate strength and oxygen barrier property after bending and has low residual solvent.

Although the present invention has been described with reference to the above several embodiments, the present invention is not limited by the above several embodiments. Various changes may be made to the configuration and details of the present invention within the scope of the present invention.

The disclosure of the present application is related to the subject matter described in Japanese Patent Application No. 2023-088032 filed on May 29, 2023, the entire disclosure of which is incorporated herein by reference.

**Claims**

1. A packaging material comprising a base material 1, a barrier layer, an adhesive layer, and a base material 2, wherein

   the barrier layer contains a hydrophilic resin,
   the adhesive layer is a layer containing a cured product of a polyol and an isocyanate curing agent (I), a permachor value of the polyol is 25 to 60,
   a mass per unit area of the adhesive layer is 1.0 to 4.5 g/m$^2$, and
   an olefin content of the packaging material is 80 % by mass or more in a total mass of packaging material.

2. The packaging material according to claim 1, wherein the hydrophilic resin is a polyvinyl alcohol resin.

3. The packaging material according to claim 1 or 2, wherein the barrier layer further contains an inorganic layered filler.

4. The packaging material according to claim 1 or 2, wherein a mass per unit area of the barrier layer is 0.7 g/m$^2$ or more.

5. The packaging material according to claim 1 or 2, wherein the polyol has a polyester structure.

6. The packaging material according to claim 1 or 2, wherein a ratio of a mass per unit area of the barrier layer to a mass per unit area of the adhesive layer is 70:30 to 15:85.

7. The packaging material according to claim 1 or 2, further comprising an anchor coat layer, wherein the anchor coat layer contains a urethane resin.

8. The packaging material according to claim 7, wherein a urea bond concentration of the urethane resin is 0.1 to 1.3 mmol/g.

9. The packaging material according to claim 1 or 2, wherein the base material 1 and the base material 2 contain a polyolefin resin.

10. A method for manufacturing a packaging material comprising a base material 1, a barrier layer, an adhesive layer, and a base material 2, the method comprising:

    a step of applying a barrier coating agent to form a barrier layer; and
    a step of applying a reactive adhesive to form an adhesive layer,
    wherein the barrier layer contains a hydrophilic resin,
    the adhesive layer is a layer comprising a reactive adhesive containing a polyol and an isocyanate curing agent (I), a permachor value of the polyol is 25 to 60,

a mass per unit area of the adhesive layer is 1.0 to 4.5 g/m$^2$, and

an olefin content of the packaging material is 80 % by mass or more in a total mass of the packaging material.

# EP 4 721 976 A1

<table>
<tr><td colspan="2"><strong>INTERNATIONAL SEARCH REPORT</strong></td><td colspan="2">International application No.<br><br><strong>PCT/JP2024/016419</strong></td></tr>
</table>

**A. CLASSIFICATION OF SUBJECT MATTER**

*B32B 27/00*(2006.01)i; *B32B 27/30*(2006.01)i; *B32B 27/32*(2006.01)i; *B65D 65/40*(2006.01)i
FI: B32B27/00 B; B32B27/30 102; B32B27/32 Z; B65D65/40 D

According to International Patent Classification (IPC) or to both national classification and IPC

**B. FIELDS SEARCHED**

Minimum documentation searched (classification system followed by classification symbols)

B32B1/00-43/00; B65D65/00-65/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2023-065851 A (TOPPAN PRINTING CO., LTD.) 15 May 2023 (2023-05-15)<br>entire text | 1-10 |
| A | WO 2017/110780 A1 (DIC CORPORATION) 29 June 2017 (2017-06-29)<br>whole document | 1-10 |
| A | JP 7264304 B1 (TOYO INK SC HOLDINGS CO., LTD.) 25 April 2023 (2023-04-25)<br>whole document | 1-10 |
| A | JP 2023-071162 A (TOYO INK SC HOLDINGS CO., LTD.) 22 May 2023 (2023-05-22)<br>whole document | 1-10 |
| A | JP 2015-137138 A (TOPPAN PRINTING CO., LTD.) 30 July 2015 (2015-07-30)<br>entire text | 1-10 |
| A | JP 7136396 B1 (DIC CORPORATION) 13 September 2022 (2022-09-13)<br>whole document | 1-10 |

☑ Further documents are listed in the continuation of Box C.    ☑ See patent family annex.

| | |
|---|---|
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **22 May 2024** | **04 June 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

**INTERNATIONAL SEARCH REPORT**

International application No.

**PCT/JP2024/016419**

### C. DOCUMENTS CONSIDERED TO BE RELEVANT

| Category* | Citation of document, with indication, where appropriate, of the relevant passages | Relevant to claim No. |
|---|---|---|
| A | US 2010/0174032 A1 (PPG INDUSTRIES OHIO, INC.) 08 July 2010 (2010-07-08) whole document | 1-10 |
| A | WO 2021/065890 A1 (DAI NIPPON PRINTING CO., LTD.) 08 April 2021 (2021-04-08) whole document | 1-10 |

Form PCT/ISA/210 (second sheet) (July 2022)

**INTERNATIONAL SEARCH REPORT**
Information on patent family members

International application No.

**PCT/JP2024/016419**

| Patent document cited in search report | | | Publication date (day/month/year) | Patent family member(s) | | | Publication date (day/month/year) |
|---|---|---|---|---|---|---|---|
| JP | 2023-065851 | A | 15 May 2023 | WO | 2023/074683 | A1 | |
| WO | 2017/110780 | A1 | 29 June 2017 | US | 2018/0362785 | A1 | |
| | | | | whole document | | | |
| | | | | EP | 3395570 | A1 | |
| | | | | CN | 108367562 | A | |
| JP | 7264304 | B1 | 25 April 2023 | (Family: none) | | | |
| JP | 2023-071162 | A | 22 May 2023 | (Family: none) | | | |
| JP | 2015-137138 | A | 30 July 2015 | (Family: none) | | | |
| JP | 7136396 | B1 | 13 September 2022 | WO | 2022/124171 | A1 | |
| | | | | CN | 116635230 | A | |
| US | 2010/0174032 | A1 | 08 July 2010 | US | 2005/0197480 | A1 | |
| | | | | US | 2005/0196601 | A1 | |
| | | | | US | 2005/0197481 | A1 | |
| | | | | WO | 2005/093000 | A1 | |
| | | | | WO | 2005/093001 | A1 | |
| WO | 2021/065890 | A1 | 08 April 2021 | US | 2022/0402250 | A1 | |
| | | | | whole document | | | |
| | | | | JP | 2021-54078 | A | |
| | | | | JP | 2021-54076 | A | |
| | | | | JP | 2021-79704 | A | |
| | | | | JP | 2021-138148 | A | |
| | | | | JP | 2021-54077 | A | |
| | | | | WO | 2021/065888 | A1 | |
| | | | | EP | 4039464 | A1 | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2013129780 A
- JP 2007136984 A
- JP 2001129915 A
- JP PATENTAPPLICATIONLAIDOPENPUBLICA-TIONNO A
- JP 2023088032 A